# FASCICULE DE BREVET EUROPEEN

(11) **EP 4 229 297 B1**
(45) Date de publication et mention de la délivrance du brevet: **09.12.2026**
(21) Numéro de dépôt: 21783562.8
(22) Date de dépôt: 08.10.2021
(51) Int. Cl.: F04B 15/08, F04B 49/06, F04B 49/12, F04B 53/00, F04B 53/08, F04B 53/10, F04B 53/14, F04B 53/16, F16J 1/00, F04B 37/08

(54) **POMPE COMPRENANT DES MOYENS DE REFROIDISSEMENT**
PUMPE MIT KÜHLMITTELN
PUMP COMPRISING COOLING MEANS

(30) Priorité: 19.10.2020 FR 2010707; 19.10.2020 FR 2010708; 19.10.2020 FR 2010709; 19.10.2020 FR 2010710; 19.10.2020 FR 2010711
(43) Date de publication de la demande: 23.08.2023
(73) Titulaire: F2M, 86530 Naintre (FR)
(72) Inventeur: ERIC, Michalski, 86270 LESIGNY SUR CREUSE (FR)
(74) Mandataire: Lequien, Philippe
(86) Numéro de dépôt international: PCT/EP2021/077929
(87) Numéro de publication internationale: WO 2022/084072

(56) Documents cités:
- EP-A1- 2 541 062
- WO-A1-2018/091178
- CA-A1- 2 045 322
- DE-A1- 1 926 379
- DE-A1- 3 520 668
- FR-A1- 2 805 006
- FR-A3- 2 961 560
- GB-A- 1 077 092
- US-A- 1 628 097
- US-A- 2 439 958
- US-A- 4 396 354
- US-A1- 2005 086 949
- US-A1- 2013 032 745
- US-A1- 2015 211 641
- US-A1- 2016 245 266
- US-A1- 2018 128 225
- US-A1- 2020 232 301

## Description

Le domaine de l'invention est celui de la conception et de la fabrication des dispositifs de pompage de fluide.

Plus précisément, l'invention concerne une pompe pour fluide cryogénique.

Les fluides cryogéniques sont des fluides, généralement des gaz, stockés à l'état liquide, qui sont pompés pour être déplacés d'un réservoir à un autre.

Classiquement, les pompes comprennent un corps de pompe définissant une chambre fluidique, le corps de pompe présentant une entrée pour aspirer le fluide dans le corps de pompe, et une sortie pour éjecter le fluide hors du corps de pompe.

L'aspiration et l'éjection du fluide sont réalisés par l'intermédiaire d'un piston mobile à l'intérieur du corps de pompe.

Plus particulièrement, le piston comprend une tête dont la périphérie radiale est en contact avec l'intérieur de la chambre fluidique pour définir alternativement un volume d'aspiration et un volume d'éjection de fluide à l'intérieur du corps fluidique.

Pour permettre l'aspiration ou l'éjection du fluide, au moins une soupape d'admission et une soupape d'éjection sont montées sur le corps de pompe pour permettre, respectivement, l'entrée du fluide dans le corps de pompe et sa sortie hors du corps de pompe.

Les mouvements du piston dans le corps de pompe peuvent engendrer un échauffement du corps de pompe et du piston.

Un tel échauffement peut diminuer le rendement de la pompe, voire générer des fuites ou, dans le pire des cas, présenter un risque pour la sécurité de personnes s'affairant autour dans un périmètre environnant à la pompe.

De même, en fonction du fluide à pomper, un gradient de température important peut-être observé dans les pièces de la pompe.

Un tel gradient de température peut alors nuire à l'intégrité structurelle des pièces de la pompe, notamment en les fragilisant.

Les fluides cryogéniques, par leurs caractéristiques intrinsèques ont un impact sur les éléments d'une pompe lors de leur circulation dans la pompe.

Notamment, les pièces de la pompe, peuvent se refroidir de manière importante, voire se rétracter.

Toutefois, les mouvements du piston dans le corps de pompe, et l'échauffement éventuel qui en résulte, peuvent générer un gradient thermique trop important dans le corps de pompe ou le piston par exemple, ce qui peut aboutir à leur rupture.

Dans le cas d'un fluide inflammable ou dont la détente peut provoquer sa combustion, il existe donc des risques d'incendie voire d'explosion de la pompe., et donc un danger pour les personnes à proximité de la pompe.

Des pompes ont donc été développées pour permettre un maintien du corps de pompe à une température optimale, comme par exemple celle décrite dans le document de brevet publié sous le numéro GB 547 455. Toutefois, une telle pompe reste perfectible en termes de rendement.

Une technique a notamment pour objectif de palier les inconvénients de l'art antérieur.

Plus précisément, la technique a pour objectif de proposer une solution permettant de limiter les gradients de température des pièces d'une pompe et d'en protéger leur intégrité structurelle.

La technique a également pour objectif de fournir une telle solution qui soit peu énergivore. La technique a en outre pour objectif de fournir une telle solution qui régule automatiquement la température de refroidissement des pièces de la pompe en fonction du fluide à pomper.

Ces objectifs, ainsi que d'autres qui apparaîtront par la suite, sont atteints grâce à une technique qui a pour objet une pompe pour fluide à pomper depuis une réserve fluidique, la pompe comprenant un corps de pompe définissant une chambre fluidique, le corps de pompe présentant :
- une première extrémité depuis laquelle s'étend au moins une tubulure d'admission débouchant dans la chambre fluidique pour permettre une admission de fluide dans la chambre fluidique;
- une deuxième extrémité opposée à la première extrémité,

la pompe comprenant également au moins une conduite fluidique s'étendant autour du corps de pompe entre la première extrémité et la deuxième extrémité,
caractérisé en ce que la conduite fluidique présente une première embouchure de liaison à la réserve fluidique, située au niveau de la deuxième extrémité du corps de pompe, et une deuxième embouchure reliée à la tubulure d'admission, pour amener le fluide à pomper depuis la réserve jusqu'à la chambre fluidique via la conduite fluidique.

Une telle pompe est particulièrement adaptée pour le pompage d'un fluide de type cryogénique.

En effet, la conduite fluidique permet de refroidir le corps de pompe qui peut tendre à se réchauffer par le déplacement et les frottements du piston dans le corps de pompe.

La circulation du fluide dans la conduite fluidique depuis la première embouchure vers la deuxième embouchure permet que le fluide, qui est alors plus froid puisque provenant de la réserve fluidique, puisse refroidir le corps de pompe en s'écoulant le long du corps de pompe avant de pénétrer dans la chambre fluidique par la tubulure d'admission.

Avantageusement, la pompe comprend également une chemise à l'intérieur de laquelle est monté le corps de pompe, la conduite fluidique étant réalisée par une rainure hélicoïdale pratiquée sur une paroi externe du corps de pompe, la conduite fluidique étant alors délimitée par la rainure hélicoïdale du corps de pompe d'une part et par la chemise d'autre part.

La création de la conduite fluidique sous forme d'une rainure hélicoïdale creusée dans la paroi externe du corps de pompe permet un meilleur échange thermique entre le corps de pompe et le fluide circulant dans la conduite fluidique.

En effet, contrairement à une conduite fluidique rapportée autour du corps de pompe, le fluide est en contact direct avec le corps de pompe, ce qui permet de maximiser les échanges thermiques.

Le corps de pompe est ainsi mieux refroidi que par une conduite fluidique externe enroulée autour du corps de pompe.

De préférence, chaque rainure hélicoïdale présente en son centre une paroi centrale divisant la rainure hélicoïdale en deux sous-rainures indépendantes, chaque sous-rainure débouchant de part et d'autre d'une tubulure d'admission

L'utilisation de sous-rainures permet, outre une meilleure circulation du fluide dans la conduite fluidique, de pouvoir alimenter chaque tubulure d'admission en au moins deux points différents. Cela offre ainsi une meilleure répartition thermique autour de la tubulure d'admission.

Selon un mode de réalisation avantageux, la pompe comprend trois conduites fluidiques débouchant chacune dans une tubulure d'admission.

Les trois conduites fluidiques permettent un meilleur refroidissement du corps de pompe, puisqu'une plus grande quantité de fluide peut circuler dans les rainures des conduites fluidiques.

De plus, les trois conduites fluidiques permettent un apport plus important de fluide dans chacune des tubulures d'admission pour permettre une admission quantitative dans la chambre fluidique du corps de pompe tout en minimisant le temps de remplissage de cette dernière.

Préférentiellement, les trois conduites fluidiques sont parallèles les unes par rapport aux autres.

Le parallélisme des conduites fluidiques, les unes par rapport aux autres, permet d'obtenir une circulation homogène du fluide autour du corps de pompe, ce qui assure un refroidissement également homogène du corps de pompe, ce qui en d'autres termes évite donc des points de température différents dans le corps de pompe. Ces points de température différente, appelés points chauds, peuvent par exemple générer une fragilité dans le corps de pompe par chocs thermiques.

Avantageusement, les premières embouchures des conduites fluidiques sont régulièrement réparties sur la périphérie du corps de pompe.

La répartition régulière sur le corps de pompe des premières embouchures des conduites fluidiques permet de maximiser l'efficacité du refroidissement par la circulation de fluide dans chacune des conduites fluidiques.

En effet, dans le cas d'un corps de pompe à section transversale circulaire, chaque première extrémité peut être située à 120° sur le corps de pompe d'une autre première extrémité, permettant alors une entrée du fluide répartie de manière homogène à la périphérie du corps de pompe.

En d'autres termes, pour trois entrées sur le corps de pompe, chaque entrée est située à 120° d'une autre entrée adjacente.

Selon un autre aspect avantageux, la ou chaque tubulure d'admission est reliée à la deuxième embouchure d'une conduite fluidique par l'intermédiaire d'un canal pratiqué dans le corps de pompe.

Un tel canal permet d'éviter un recours à des pièces ou à des tubulures externes au corps de pompe, ces pièces ou tubulures externes pouvant être fragiles et nécessiter une maintenance régulière.

En d'autres termes, les canaux peuvent être pratiqués par exemple par perçage ou directement créés lors de la fabrication du corps de pompe si celui-ci est réalisé par impression 3D.

En outre, cela permet d'éviter d'avoir un corps de pompe en plusieurs parties entre chacune desquelles un joint d'étanchéité doit être intercalé. Les risques de fuite au niveau du corps de pompe sont alors limités voire supprimés.

De préférence, la chambre fluidique présente une portion tronconique située au niveau de la première extrémité du corps de pompe, la ou chaque tubulure d'admission débouchant dans la portion tronconique.

La portion tronconique de la chambre fluidique permet de maximiser le volume de la chambre fluidique et donc d'augmenter le rendement de la pompe.

Avantageusement, la portion tronconique se termine par une face d'extrémité sur laquelle débouche une tubulure d'évacuation.

Le positionnement de la tubulure d'évacuation permet ainsi de faciliter l'évacuation, hors du corps de pompe, du fluide pompé présent dans la chambre fluidique, de manière simple et efficace. En effet, la tubulure d'évacuation étant positionnée dans l'axe de translation du piston dans le corps de pompe, cela facilite le fluage du fluide pompé hors de la pompe.

Par ailleurs, les fluides cryogéniques, par leurs caractéristiques intrinsèques, ont un impact sur les éléments d'une pompe lors de leur circulation dans la pompe.

Notamment, les pièces de la pompe, et plus précisément, la tête du piston peut se rétracter si bien que sa périphérie radiale n'est plus en contact avec l'intérieur de la chambre fluidique, ce qui crée alors des fuites de fluide hors du volume variable, à l'intérieur du corps de pompe.

Dans le cas d'un fluide inflammable ou dont la détente peut provoquer sa combustion, il existe des risques d'incendie voire d'explosion de la pompe.

Pour pallier à cela, des têtes de pistons à étages ont été développées.

Ces têtes, comme cela est par exemple décrit dans le document de brevet publié sous le numéro FR 2 718 193, comprennent plusieurs disques assemblés les uns sur les autres au moyen d'une ou plusieurs vis, et qui définissent entre eux des logements annulaires dans lesquels sont disposés des joints toriques.

Des pistons comprenant plusieurs disques assemblés les uns sur les autres sont également connus des documents US 1 628 097 A et DE 35 20 668 A1. Toutefois, les documents US 1 628 097 A et DE 35 20 668 A1 ne divulguent ni un joint annulaire continu logé et serré entre deux disques directement adjacents, ni un assemblage de deux disques directement adjacents par coopération hélicoïdale entre le filetage externe d'une saillie de l'un des disques et le taraudage interne d'un trou ménagé dans l'autre disque.

Ces têtes de pistons ne présentent toutefois pas les garanties nécessaires à la sécurité de pompage des fluides cryogéniques.

En effet, par leur rétraction au contact d'un fluide cryogénique les vis n'assurent plus le maintien en position des disques qui ménagent alors entre eux des espaces entre lesquels les joints toriques sont libres de se déplacer et dans lesquels le fluide cryogénique peut circuler et fuir.

L'invention a également pour objectif de palier ces inconvénients de l'art antérieur.

Plus précisément, l'invention a pour objectif de proposer une solution qui permette le pompage des fluides cryogéniques en toute sécurité.

L'invention a également pour objectif de fournir une telle solution qui permette de compenser la dilatation différentielle des différents composants de la tête d'un piston. L'invention a en outre pour objectif de fournir une telle solution qui soit simple de fabrication. L'invention concerne une pompe selon l'objet de la revendication 1.

Un tel agencement des disques, et notamment la coopération entre les trous et les saillies, permet de pouvoir obtenir un piston et notamment une tête de piston facile de montage qui assure une retenue sûre du joint.

En effet, le trou et la saillie de chaque disque étant centrés sur la face inférieure et sur la face supérieure respectivement, cela permet de pouvoir rendre la disposition des disques concentrique, de sorte à permettre une bonne étanchéité entre le piston et un corps de pompe dans lequel le piston est monté en translation.

En d'autres termes, cela permet que, depuis un axe de translation du piston, l'extension radiale de chaque disque soit identique en tous points.

De préférence, le piston comprend au moins un troisième disque présentant :
- une face supérieure depuis laquelle s'étend une saillie;
- une face inférieure sur laquelle débouche un trou,

le troisième disque étant assemblé aux deux autres disques par coopération de sa saillie avec un trou libre des deux autres disques,
et en ce qu'il comprend également un deuxième joint annulaire continu intercalé entre la face supérieure du troisième disque et la face inférieure d'un des deux autres disques auquel il est assemblé .

Le troisième disque permet de pouvoir monter un deuxième joint annulaire sur le piston. Cela favorise alors l'étanchéité entre le piston et le corps de pompe dans lequel le piston est monté.

En outre, à l'instar des deux autres disques, le troisième disque peut être monté coaxialement aux deux autres disques, ce qui permet d'accroître la qualité de l'étanchéité entre le piston et le corps de pompe dans lequel le piston est monté.

Avantageusement, le piston comprend une pièce de raccordement à une tige du piston, la pièce de raccordement présentant, en son centre un pion coopérant avec un trou libre de l'un des disques.

La pièce de raccordement, grâce à sa saillie, peut ainsi être montée coaxialement aux disques du piston, ce qui permet d'offrir un bon guidage axial du piston dans le corps de pompe dans lequel il est monté.

Cela participe alors à la bonne étanchéité entre le piston d'une part et le corps de pompe dans lequel le piston est monté d'autre part.

Dans ce cas, la pièce de raccordements présente préférentiellement une portion de raccordement opposée au pion, la portion de raccordement présentant une forme sphérique destinée à être reçue dans une cavité sphérique de la tige du piston.

La forme sphérique permet, grâce à sa coopération avec la tige, de former une liaison rotule assurant ainsi de prendre en compte un éventuel désaxement de la tige et/ou de la tête du piston et donc de garantir l'étanchéité entre le piston le corps de pompe dans lequel le piston est monté.

Selon un aspect avantageux, le ou chaque joint annulaire continu, présente une section longitudinale en forme de U, le U s'ouvrant selon une direction parallèle à un axe de révolution du joint annulaire continu.

La section en U permet au joint annulaire continu de se déformer aisément pour venir épouser la forme de la paroi interne du corps de pompe et ainsi assurer une étanchéité efficace entre le piston et le corps de pompe dans lequel le piston est monté.

De préférence, l'un au moins des disques présente, sur sa face supérieure, un épaulement dans lequel est reçu le joint annulaire continu.

L'épaulement permet de créer un logement dans lequel est reçu le joint annulaire continu. Cela participe à la bonne mise en position du joint entre deux disques, ce qui facilite alors la déformation élastique du joint pour assurer l'étanchéité entre le piston et le corps de pompe dans lequel le piston est monté en translation.

Selon un mode de réalisation préféré, chaque trou présente un taraudage interne et chaque saillie présente un filetage externe, le filetage externe d'une saillie coopérant hélicoïdalement avec le taraudage interne d'un trou.

Le taraudage interne et le filetage externe permettent, par coopération hélicoïdale, de faciliter l'assemblage des disques du piston les uns avec les autres.

En outre, par l'application d'un couple de serrage adéquat, il est possible de comprimer le joint annulaire continu entre deux disques sans pour autant limiter sa déformation, de sorte à ce que le joint annulaire continu puisse assurer l'étanchéité avec le corps de pompe dans lequel il est monté en translation.

Avantageusement, l'un des disques est un disque de tête destiné à être en contact du fluide à pomper, la face supérieure du disque de tête présentant une forme tronconique.

Ainsi, en utilisant de l'invar pour réaliser les disques du piston, le piston ne subira que très peu les effets des températures négatives du fluide cryogénique pompé, permettant ainsi de conserver une bonne étanchéité entre le piston et le corps de pompe dans lequel le piston est monté en translation.

De préférence, chaque disque est réalisé en invar.

L'invar permet d'utiliser le piston dans une pompe pour fluide cryogénique notamment.

En effet, l'invar présente des caractéristiques mécaniques lui permettant de résister à ces températures très faibles, cela sans se déformer ou se fragiliser, ou quasiment.

En variante, tout autre matériau présentant des caractéristiques structurelles et fonctionnelles proches ou identiques à celle de l'invar pourrait être utilisé.

Selon un autre aspect avantageux, le ou chaque joint annulaire continu est réalisé dans un matériau de la famille des polyimides.

A l'instar de l'invar, les matériaux de la famille des polyimides, sont peu sensibles aux températures.

Ainsi, même en cas de très faible température, des joints en polyimide ne se déforment pas ou très peu sous l'effet des faibles températures, ce qui leur permet de conserver leur forme et leur élasticité, assurant ainsi l'étanchéité recherchée avec le corps de pompe.

Une technique concerne également une pompe comprenant un corps de pompe et un piston tels que décrits précédemment, le piston étant monté coulissant dans le corps de pompe de sorte que le ou chaque joint annulaire continu soit au contact d'une paroi interne du corps de pompe.

Par ailleurs, les fluides cryogéniques sont des fluides, généralement des gaz, stockés à l'état liquide, qui sont pompés pour être déplacés d'un réservoir à un autre.

Pour cela des pompes sont utilisées.

Classiquement, les pompes comprennent un corps de pompe définissant une chambre fluidique, le corps de pompe présentant une entrée pour aspirer le fluide dans le corps de pompe, et une sortie pour éjecter le fluide hors du corps de pompe.

L'entrée et la sortie peuvent être identiques et utilisées dans un sens d'entrée ou de sortie au moyen d'une ou plusieurs vannes.

L'aspiration et l'éjection du fluide sont réalisés par l'intermédiaire d'un piston mobile à l'intérieur du corps de pompe.

Plus particulièrement, le piston comprend une tête dont la périphérie est en contact avec l'intérieur de la chambre fluidique pour définir alternativement un volume d'aspiration et un volume d'éjection de fluide à l'intérieur du corps fluidique.

Les fluides cryogéniques, par leurs caractéristiques intrinsèques, ont un impact sur les éléments d'une pompe lors de leur circulation dans la pompe.

Notamment, les pièces de la pompe, peuvent se rétracter et se fragiliser. Cette fragilisation vient par exemple d'un refroidissement trop important qui peut provoquer sa casse en cas de choc par exemple.

La rétraction des pièces de la pompe peut provoquer des jeux entre les pièces, ce qui peut conduire à des fuites de fluide cryogénique hors de la pompe.

Dans le cas d'un fluide inflammable ou dont la détente peut provoquer sa combustion, il existe des risques d'incendie voire d'explosion de la pompe en cas de fuite.

Par ailleurs, les pièces de la pompe en contact avec le fluide cryogénique peuvent refroidir les pièces environnantes.

Ce refroidissement peut être lié à un contact entre les pièces d'une part. Dans ce cas, il est possible d'intercaler, entre les différentes pièces, des éléments en matériau isolant qui agissent alors comme des rupteurs de ponts thermiques.

D'autre part, ce refroidissement peut être lié à un rayonnement de température.

C'est notamment le cas du corps de la pompe qui peut rayonner vers l'extérieur de la pompe.

Le corps de pompe est généralement logé dans un carter qui peut également se refroidir par rayonnement du corps de pompe. Pour éviter cela, des moyens d'isolation peuvent être intercalés entre le corps de pompe et le carter, ces éléments isolants permettant de réaliser un gradient de température entre le carter et le corps de pompe pour que le carter ne soit pas refroidi de manière trop importante, ce qui pourrait nuire à son intégrité.

Toutefois, certaines parties de la pompe ne sont pas ou peu protégées du rayonnement et/ou de la conductivité.

C'est notamment le cas des moyens moteurs qui peuvent être refroidis par le rayonnement du corps de pompe.

En outre, dans le cas d'une pompe pour fluide cryogénique, le corps de pompe doit être maintenu à une température de fonctionnement pour éviter la détente du fluide. En effet, une telle détente du fluide pourrait provoquer un risque de combustion du fluide cryogénique et donc un risque d'explosion de la pompe.

Il est donc également nécessaire d'éviter un réchauffement du corps de pompe par les moyens moteurs.

Pour éviter le refroidissement des moyens moteurs, ou éviter le réchauffement du corps de pompe, il peut donc être possible soit de les éloigner du corps de pompe pour éviter le rayonnement, soit de remplacer la tige du piston par un matériau faiblement conducteur thermiquement.

Ces solutions présentent certains inconvénients.

L'éloignement des moyens moteurs par rapport au corps de la pompe va à l'encontre de la compacité de l'ensemble et peut nécessiter une augmentation des capacités des moyens moteurs pour assurer une transmission de puissance souhaitée qui prend en compte l'éloignement par rapport au corps de pompe.

De plus, l'utilisation d'un matériau faiblement conducteur thermiquement pour la tige du piston peut provoquer des faiblesses en termes de résistance mécanique. Il est donc nécessaire d'augmenter les dimensions de la tige de piston, ce qui peut engendrer une augmentation de la taille de la pompe, une augmentation du poids de la pompe et/ou une augmentation de la puissance à fournir par les moyens moteurs.

La technique a également pour objectif de palier ces inconvénients de l'art antérieur.

Plus précisément, la technique a pour objectif de proposer une solution qui permette de limiter, voire supprimer le refroidissement des pièces d'une pompe pour fluide cryogénique, qui ne sont pas en contact avec le fluide à pomper et/ou de limiter le réchauffement des pièces de la pompe, qui sont en contact avec le fluide à pomper.

La technique a également pour objectif de fournir une telle solution qui permette de conserver un encombrement réduit de la pompe.

La technique a en outre pour objectif de fournir une telle solution qui soit simple de fabrication, d'installation et de maintenance.

Ces objectifs, ainsi que d'autres qui apparaîtront par la suite, sont atteints grâce à une technique qui a également pour objet une pompe comprenant un compartiment de pompage intégrant :
- un corps de pompe ;
- un piston mobile en translation à l'intérieur du corps de pompe selon un axe de translation, le piston comprenant une tête et une tige par laquelle la tête est mue en translation,

la pompe comprenant également :
   - un compartiment moteur intégrant des moyens moteurs positionnés le long de l'axe de translation et couplés à la tige du piston pour entraîner en déplacement le piston dans le corps de pompe ;
   - un compartiment intermédiaire se présentant sous la forme d'une entretoise tubulaire reliant le compartiment de pompage et le compartiment moteur,
la pompe comprenant également des moyens d'isolation thermique pour isoler thermiquement la pompe d'un milieu extérieur, les moyens d'isolation thermique comprenant un élément tubulaire logé dans le compartiment intermédiaire et s'étendant autour de la tige du piston, selon l'axe de translation, entre le compartiment de pompage et le compartiment moteur, l'élément tubulaire définissant avec l'entretoise un espace pour limiter le rayonnement radial de la tige du piston vers l'extérieur de la pompe, caractérisée en ce que les moyens d'isolation thermique comprennent également au moins un disque en matériau isolant, positionné à l'intérieur de l'élément tubulaire et s'étendant radialement à l'axe de translation, depuis la tige du piston jusqu'à l'élément tubulaire.

Les disques en matériau isolant permettent de pouvoir limiter le rayonnement de température axialement à l'axe de translation du piston.

Plus particulièrement, ces disques forment une barrière thermique le long de l'axe de translation, ce qui permet, à l'aide de l'élément tubulaire, de pouvoir limiter le réchauffement du corps de la pompe, en particulier lorsque le fluide pompé est un fluide cryogénique.

Avantageusement, la pompe comprend également une pièce support tubulaire, solidaire du compartiment moteur et entourant la tige du piston, la pièce support tubulaire présentant à sa périphérie externe une série de rainures annulaires recevant chacune un disque de matériau isolant.

La pièce support tubulaire permet, en étant raccordée au compartiment moteur, de pouvoir recevoir et maintenir en position d'isolation les disques en matériau isolant, cela au bénéfice de l'efficacité de l'isolation de la pompe, notamment à l'encontre du rayonnement thermique.

De préférence, l'élément tubulaire présente, autour de l'axe de translation, un profil de révolution comprenant une alternance de creux et de crêtes par rapport à l'axe de translation.

L'alternance de creux et de crêtes sur le profil de révolution de l'élément tubulaire permet à ce dernier de pouvoir se déformer axialement, c'est-à-dire selon l'axe de translation, pour pouvoir prendre en compte une rétraction ou une dilatation des différentes pièces de la pompe, et notamment du compartiment moteur et du compartiment de pompage qui, par leur rétractation ou par leur dilatation, s'écartent ou se rapprochent l'un de l'autre respectivement.

Ainsi, la pièce tubulaire suit le mouvement d'écartement ou de rapprochement du compartiment moteur par rapport au compartiment de pompage.

Selon un mode de réalisation préféré, les moyens d'isolation thermique comprennent cinq disques en matériau isolant, régulièrement espacés le long de l'axe de translation.

L'utilisation de cinq disques en matériau isolant permet de pouvoir limiter de manière importante le rayonnement selon l'axe de translation.

L'utilisation des cinq disques en matériau isolant permet de pouvoir créer des chambres de température et donc un gradient de température se réchauffant à mesure de l'écartement par rapport au compartiment de pompage dans le cas d'une pompe pour fluide cryogénique. Selon un aspect avantageux, le ou chaque disque en matériau isolant est positionné en regard d'un creux de l'élément tubulaire.

La position en regard d'un creux de l'élément tubulaire de chacun des disques en matériau isolant assure une limitation de la voie de passage de rayonnement des températures, ce qui participe à l'isolation de la pompe et augmente le rendement de la pompe en évitant le refroidissement des autres pièces de la pompe par rayonnement thermique et le réchauffement du corps de pompe, également par rayonnement thermique.

Avantageusement, les moyens d'isolation thermique comprennent également une première couche en matériau isolant, la première couche en matériau isolant entourant le corps de pompe le long de l'axe de translation.

La première couche en matériau isolant qui entoure le corps de pompe le long de l'axe de translation permet de participer activement à éviter le réchauffement du corps de pompe lorsque le fluide pompé est un fluide cryogénique.

De préférence, les moyens d'isolation thermique comprennent une deuxième couche en matériau isolant, la deuxième couche en matériau isolant entourant la première couche en matériau isolant le long de l'axe de translation.

La deuxième couche en matériau isolant permet d'augmenter encore l'isolation de la pompe, et notamment du corps de pompe, à la fois contre le rayonnement des autres éléments de la pompe, et ainsi contre le réchauffement du corps de pompe lorsque la pompe est destinée à pomper un fluide cryogénique.

Selon un aspect avantageux, la deuxième couche en matériau isolant est solidaire d'un support tubulaire monté autour du corps de pompe, le support tubulaire étant écarté de la première couche en matériau isolant pour définir, entre la première couche en matériau isolant et le support tubulaire, un espace périphérique au corps de pompe.

La création de l'espace entre la première couche en matériau isolant et la deuxième couche en matériau isolant permet d'ajouter un élément supplémentaire d'isolation. En effet, l'air, ou le vide dans le cas présent, entre deux éléments solides permet d'isoler thermiquement les éléments l'un par rapport à l'autre.

Dans le cas d'une pompe destinée au pompage d'un fluide cryogénique, cet espace permet de créer un gradient de température entre la première couche en matériau isolant et la deuxième couche en matériau isolant, ce qui a pour effet d'améliorer d'une part les performances et le rendement de la pompe et d'autre part d'éviter une fatigue structurelle des éléments de la pompe, de manière prématurée.

Préférentiellement, le matériau isolant est un polytéréphtalate d'éthylène aluminisé.

Le polytéréphtalate d'éthylène aluminisé permet de pouvoir offrir un bon niveau d'isolation thermique tout en présentant une épaisseur faible et un poids contenu.

Ce matériau est notamment utilisé pour la fabrication des couvertures de survie, ou encore des systèmes d'isolation des satellites.

Avantageusement, l'un au moins de l'élément tubulaire, du compartiment intermédiaire et de la tige du piston est réalisé dans un matériau composite.

L'utilisation d'un matériau composite, comprenant par exemple de la fibre de verre et de la résine époxy, permet de limiter les échanges thermiques entre les pièces de la pompe par conduction.

Par ailleurs, les fluides cryogéniques sont des fluides, généralement des gaz, stockés à l'état liquide, qui sont pompés pour être déplacés d'un réservoir à un autre.

Pour cela des pompes sont utilisées.

Classiquement les pompes comprennent un corps de pompe définissant une chambre fluidique, le corps de pompe présentant une entrée pour aspirer le fluide dans le corps de pompe, et une sortie pour éjecter le fluide hors du corps de pompe.

L'aspiration et l'éjection du fluide sont réalisés par l'intermédiaire d'un piston mobile à l'intérieur du corps de pompe.

Plus particulièrement, le piston comprend une tête dont la périphérie radiale est en contact avec l'intérieur de la chambre fluidique pour définir alternativement un volume d'aspiration et un volume d'éjection de fluide à l'intérieur du corps fluidique.

Les fluides cryogéniques, par leurs caractéristiques intrinsèques, ont un impact sur les éléments d'une pompe lors de leur circulation dans la pompe.

Notamment, les pièces de la pompe, et plus précisément, la tête du piston peut se rétracter si bien que le volume variable de la pompe s'en trouve changé.

Le rendement de la pompe est alors diminué et, dans le pire des cas, la pompe peut ne plus permettre l'échange de fluide entre les réservoirs.

Pour pallier à cela, il est connu de modifier la course du piston afin de maintenir un taux de compression adéquat dans la pompe, ce qui permet de maintenir un débit d'aspiration et d'éjection souhaité.

Une méthode connue de gestion de course de piston se base sur l'ouverture et la fermeture d'une vanne d'alimentation de la pompe. Ainsi, en fonction de la durée d'ouverture de la vanne pour alimenter la pompe en fluide, la course du piston sera modulée pour obtenir un taux de compression souhaité dans la pompe.

Toutefois, cette méthode n'est pas adaptée au pompage d'un fluide cryogénique.

En effet, la nécessité de modification de la course du piston provient de la rétraction du piston qui, pour une course constante, provoque une augmentation non souhaitée du volume variable et, par voie de conséquence, une diminution du taux de compression. Ainsi, malgré un changement de course en fonction d'une durée d'alimentation de la pompe, la taille du volume variable n'est pas maîtrisée, ce qui nuit au rendement de la pompe.

La technique a également pour objectif de palier ces inconvénients de l'art antérieur.

Plus précisément, la technique a pour objectif de proposer une pompe dont la course du piston peut être modifiée en fonction de caractéristiques du fluide à pomper.

La technique a également pour objectif de fournir une telle pompe dont la modification de la course du piston est automatique.

La technique a en outre pour objectif de fournir une telle pompe dont la course du piston peut être réglée avec précision sans arrêt de la pompe.

Ces objectifs, ainsi que d'autres qui apparaîtront par la suite, sont atteints grâce à une technique qui a également pour objet une pompe comprenant :
- un corps de pompe ;
- un piston mobile en translation dans le corps de pompe, selon un axe de translation ;
- des moyens moteurs pour entraîner en translation le piston dans le corps de pompe ;
- des moyens de réglage de la course du piston,

caractérisée en ce que les moyens de réglage de la course du piston comprennent :
   - un capteur de fin de course du piston ;
   - un calculateur relié au capteur de fin de course et aux moyens moteurs,
le calculateur étant paramétré pour générer et transmettre une consigne de fonctionnement aux moyens moteurs, à partir d'un signal de sortie du capteur de fin de course, et pour ajuster la course du piston dans le corps de pompe selon une course nominale prédéfinie.

Selon le signal de sortie du capteur de fin de course, la course du piston peut être augmentée ou réduite par action sur les moyens moteurs.

En fonctionnement normal, l'augmentation continuelle de la distance parcourue par le piston grâce aux moyens moteurs peut être réalisée de sorte à détecter en permanence un signal par le capteur de fin de course.

Ainsi, dans le cas d'une pompe pour fluide cryogénique, la rétraction due au froid du fluide cryogénique peut provoquer une diminution de la course du piston dans le corps de pompe, cette course étant alors augmentée via les moyens moteurs de sorte à obtenir un rendement de la pompe égal durant tout le fonctionnement de la pompe ou quasiment.

En cas de détection d'un signal, la course du piston peut alors être modifiée et raccourcie par les moyens moteurs, ou au contraire augmentée, par incrémentation de sorte à obtenir ou conserver un rendement de pompage souhaité.

De préférence, le capteur de fin de course est positionné sur le corps de pompe, à l'extérieur de celui-ci, le long de l'axe de translation.

Le positionnement sur le corps de la pompe du capteur de fin de course permet de limiter l'intrusion et notamment les perturbations du fluide dans le corps de pompe, notamment pour maximiser le rendement de la pompe.

Dans ce cas, le capteur de fin de course est avantageusement positionné dans l'axe de translation du piston dans le corps de pompe.

Le positionnement du capteur de fin de course dans l'axe de translation du piston dans le corps de pompe permet d'obtenir une mesure fiable et précise du déplacement du piston dans le corps de pompe et ainsi de pouvoir régler finement la course du piston dans le corps de pompe.

Selon un aspect avantageux, le capteur de fin de course est un accéléromètre.

L'utilisation d'un accéléromètre permet de détecter de manière fiable et précise la position ou le point mort haut du piston dans le corps de pompe, c'est-à-dire la venue en butée du piston dans le corps de pompe. La modulation de la distance de translation du piston dans le corps de pompe peut ainsi être améliorée, cela au bénéfice du rendement de la pompe. Préférentiellement, le piston comprend une tige présentant un filetage externe, et la liaison entre les moyens moteurs et la tige du piston est du type vis à billes ou à rouleaux.

L'utilisation d'une liaison du type vis à billes ou à rouleau entre les moyens moteurs et la tige du piston permet de régler finement et rapidement la course du piston dans le corps de pompe.

Ainsi, de manière précise et rapide, il est possible de régler et de moduler la course du piston dans le corps de pompe pour obtenir ou maintenir un rendement souhaité de pompage.

Par ailleurs, les corps de pompe comprennent généralement une culasse dans laquelle est mobile le piston, et un couvre-culasse qui vient recouvrir la culasse et sur lequel sont montées la (ou les) soupape(s) d'admission et la (ou les) soupape(s) d'éjection. Pour étanchéifier le corps de pompe, un joint de culasse est alors intercalé entre la culasse et le couvre culasse.

Les fluides cryogéniques, par leurs caractéristiques intrinsèques, ont un impact sur les éléments d'une pompe lors de leur circulation dans la pompe.

Notamment, les pièces de la pompe, peuvent se rétracter si bien que la culasse et le couvre culasse peuvent s'écarter, laissant alors un jeu trop important pour être comblé par le joint de culasse. Il peut alors en résulter des fuites de fluide hors du corps de pompe.

Dans le cas d'un fluide inflammable ou dont la détente peut provoquer sa combustion, il existe donc des risques d'incendie voire d'explosion de la pompe.

La technique a également pour objectif de palier ces inconvénients de l'art antérieur

Plus précisément, la technique a pour objectif de proposer une pompe permettant de pomper un fluide cryogénique sans fuites, ou quasiment.

La technique a également pour objectif de fournir une telle pompe dont le fonctionnement des soupapes est automatique.

La technique a en outre pour objectif de fournir une telle pompe qui soit simple de fabrication.

Ces objectifs, ainsi que d'autres qui apparaîtront par la suite, sont atteints grâce à une technique qui a également pour objet une pompe comprenant :
- un corps de pompe présentant au moins une tubulure d'admission entre l'extérieur et l'intérieur du corps de pompe, la tubulure d'admission présentant, à une extrémité débouchant dans le corps de pompe, un siège de soupape ayant un profil semi-elliptique de révolution autour d'un axe central du siège de soupape ;
- pour chaque siège de soupape, une soupape présentant une tige ;

la soupape étant mobile en translation, selon un axe de déplacement défini par la tige de la soupape, entre :
   - une position de passage dans laquelle elle est écartée du siège de soupape ;
   - une position d'obturation dans laquelle elle obture le siège de soupape,
caractérisé en ce que le corps de pompe présente, dans chaque tubulure d'admission, en amont du siège de soupape selon un sens d'écoulement de fluide depuis l'extérieur vers l'intérieur de la pompe, au moins une encoche,
et en ce que la pompe comprend également, pour chaque soupape :
   - un guide en translation de la soupape, le guide étant reçu au moins partiellement dans la ou chaque encoche ;
   - des moyens de rappel de la soupape dans sa position d'obturation, les moyens de rappel étant intercalés entre la soupape et le guide,
et en ce que le guide est monté dans la ou chaque encoche avec un jeu fonctionnel autorisant un passage de l'axe de déplacement d'une position désaxée par rapport à l'axe central, dans la position de passage, à une position confondue avec l'axe central, dans la position d'obturation.

Le montage avec jeu fonctionnel du guide dans la ou chaque encoche de la tubulure d'admission permet d'adapter la position de la soupape par rapport au siège de soupape de manière automatique et fiable.

En effet, grâce au jeu fonctionnel, la soupape, qui est alors repoussée dans sa position d'obturation par la pression du fluide dans la chambre fluidique du corps de pompe, vient contre le siège de soupape de manière libre et non contrainte. Cela évite notamment que la soupape ne soit bloquée en déplacement à cause de contraintes trop importantes.

Pour réaliser une étanchéité correcte au niveau du siège de soupape, la soupape, par la pression régnant dans la chambre fluidique, trouve sa position définitive d'étanchéité de manière naturelle. Cette position définitive d'étanchéité correspond à une position dans laquelle la tige de la soupape s'étend dans l'axe de la tubulure, cette position pouvant être différente lors de la venue en butée de la soupape contre le siège de soupape.

Le jeu fonctionnel permet ainsi de rattraper et d'autoriser la mobilité libre de la soupape pour sa venue contre le siège de soupape, cela afin que la soupape atteigne sa position d'étanchéité nominale de manière sûre.

Avantageusement, la soupape comprend une tête située à une extrémité de la tige, la tête présentant une portion à profil semi-elliptique tournée vers la tige et complémentaire de forme avec le siège de soupape.

La portion à profil semi-elliptique du piston permet une coopération de forme avec le siège de soupape, ce qui assure une bonne étanchéité entre le siège de soupape et la tête de soupape dans la position d'obturation de la soupape.

De préférence, la tête de la soupape présente, une rainure annulaire à l'intérieure de laquelle est logé un joint annulaire, le joint annulaire étant intercalé entre la tête de la soupape et le siège de soupape dans la position d'obturation de la soupape.

Le joint annulaire, par sa venue au contact sur le siège de soupape, dans la position d'obturation de la soupape, permet de garantir une bonne étanchéité entre le siège de soupape et la soupape.

Ainsi, la soupape peut être légèrement désaxée par rapport à l'axe de la tubulure, le joint permettant alors de compenser ce léger désaxement et donc de garantir l'étanchéité entre la soupape et le siège de soupape, notamment lorsque la soupape n'est pas intégralement dans sa position d'obturation.

Dans ce cas, la rainure annulaire est préférentiellement pratiquée sur la portion à profil semi-elliptique de la tête de la soupape.

La présence de la rainure permet de loger le joint annulaire de sorte que celui-ci reste en position sur la tête de soupape lors du déplacement de la soupape et permette ainsi l'étanchéité entre la soupape et le siège de soupape, même lorsque la soupape n'est pas dans sa position d'obturation.

Avantageusement, le joint annulaire présente une partie bombée venant en appui contre le siège de soupape dans la position d'obturation de la soupape, la partie bombée se déformant élastiquement pour épouser le siège de soupape et réaliser une obturation hermétique du siège de soupape.

La présence de la partie bombée sur le joint annulaire permet de compenser un éventuel désaxement de la soupape et donc de garantir l'étanchéité entre la soupape et le siège de soupape dans toutes les configurations ou quasiment, lorsque la soupape est dans sa position d'obturation ou proche de sa position d'obturation.

Avantageusement, le guide comprend un fût central depuis lequel s'étendent radialement trois bras, chaque bras étant monté dans une encoche.

Une telle architecture du guide permet de le positionner dans la tubulure sans que celui-ci ne représente une gêne à l'écoulement du fluide en direction de la chambre fluidique du corps de pompe.

En outre, l'utilisation de trois branches permet de garantir une orientation idéale de la soupape lors de son déplacement entre sa position d'obturation et sa position de passage, ou inversement. Enfin, cette architecture de guide favorise le guidage la soupape lors de son déplacement.

De préférence, les moyens de rappel comprennent un ressort de compression monté autour du fût central du guide, le ressort étant intercalé entre les bras du guide et une butée solidaire de la tige à une extrémité opposée de la tête.

De tels moyens de rappel peuvent être remplacés de manière simple et rapide. Par ailleurs, le positionnement des moyens de rappel permet de positionner la soupape dans une position normalement fermée, c'est-à-dire de conserver la soupape dans sa position d'obturation lorsque aucun fluide n'est pompé ou lorsque le piston provoque une compression du fluide dans la chambre fluidique. Cela permet donc de garantir l'étanchéité entre le siège de soupape et la soupape, et donc d'éviter une fuite de fluide hors du corps de pompe.

Le fluide ne peut ainsi s'évacuer que par la tubulure d'éjection du corps de pompe.

Selon un aspect avantageux, la butée est montée de manière amovible sur la tige.

Ainsi, il est possible de pouvoir changer rapidement les moyens de rappel par simple retrait de la butée qui est montée de manière amovible sur la tige. En outre, cela permet de monter rapidement la tige ou la soupape sur le guide, de manière aisée pour un technicien.

Préférentiellement, la pompe comprend une chemise présentant une paroi de fond, le corps de pompe étant monté dans la chemise, la paroi de fond de la chemise bouchant une ouverture de la tubulure d'admission débouchant à l'extérieur du corps de pompe.

La présence de la chemise venant recevoir le corps de pompe permet de fermer les tubulures et ainsi de ne pouvoir monter la soupape que par l'extérieur du corps de pompe.

En d'autres termes, le corps de pompe peut ainsi être monobloc, ce qui n'empêche pas le montage des soupapes pour l'admission de fluide dans la chambre fluidique, tout en permettant de limiter les fuites de fluide hors du corps de pompe puisque le corps de pompe peut être réalisé de manière monobloc, c'est-à-dire en une seule pièce sans présence de joint qui formerait alors entre les pièces un risque de fuite de fluide.

Avantageusement, chaque tubulure d'admission forme avec la paroi de fond de la chemise et la soupape associée une réserve de fluide dans le corps de pompe.

La réserve de fluide permet de créer une zone tampon dans laquelle le fluide est collecté préalablement à son entrée dans la chambre fluidique du corps de pompe, ce qui assure un fonctionnement continu de la pompe et notamment une alimentation de la chambre fluidique de manière continue, notamment lorsque la course du piston dans le corps de pompe est variable.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] la figure 1 est une vue de dessus d'une pompe , la pompe comprenant un compartiment moteur et deux compartiments de pompage répartis de part et d'autre du compartiment moteur ;
[Fig. 2] la figure 2 est une vue simplifiée en coupe longitudinale de la pompe, sur laquelle est répresenté le compartiment moteur et un seul des compartiments de pompage;
[Fig. 4] la figure 4 est une vue en perspective de dessous du corps de pompe ;
[Fig. 5] la figure 5 est une vue en perspective de dessus du corps de pompe , cette figure comprenant un médaillon de détail à échelle agrandie, illustrant une tubulure d'admission fluidique ;

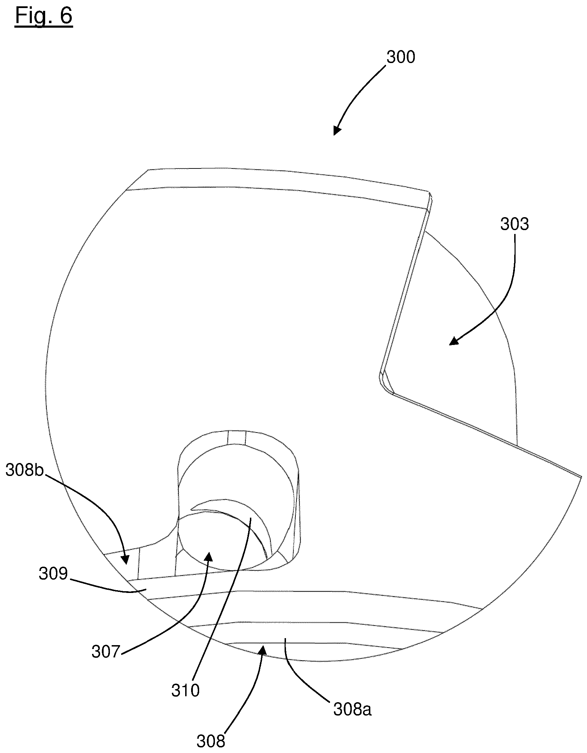

[Fig. 6] la figure 6 est une vue de détail du corps de pompe , illustrant une voie d'admission fluidique dans les tubulures d'admission fluidique ;
[Fig. 7] la figure 7 est une vue schématique illustrant le corps de pompe , entouré par une chemise extérieure ;
[Fig. 8] la figure 8 est une vue en coupe longitudinale illustrant un piston dans un corps de pompe de la pompe selon l'invention ;
[Fig. 9] la figure 9 est une vue de côté d'une tête de piston de la pompe selon l'invention ;
[Fig. 10] la figure 10 est une vue en coupe longitudinale d'une tête de piston de la pompe selon l'invention, cette figure comprenant un médaillon de détail à échelle agrandie illustrant un joint annulaire ;
[Fig. 11] la figure 11 est une vue de détails en coupe longitudinale de la pompe , illustrant des moyens d'isolation thermiques entre les moyens moteur ou le compartiment moteur et compartiment de pompage ;
[Fig. 12] la figure 12 est une vue de détails en coupe longitudinale selon l'encart 4 de la figure 3 ;
[Fig. 13] la figure 13 est une vue schématique d'une pompe comprenant des moyens de réglage de la course du piston ;
[Fig. 14] la figure 14 est une vue en perspective de dessus d'un corps de pompe , cette figure présentant un médaillon de détail à échelle agrandie illustrant une tubulure d'admission du corps de pompe à l'intérieur de laquelle est montée une soupape d'admission ;
[Fig. 15] la figure 15 est une vue en coupe longitudinale d'une soupape d'admission de la pompe ;
[Fig. 16] la figure 16 est une vue de face d'une soupape d'admission de la pompe , cette figure présentant un médaillon de détail à échelle agrandie illustrant un joint périphérique monté sur la soupape d'admission.

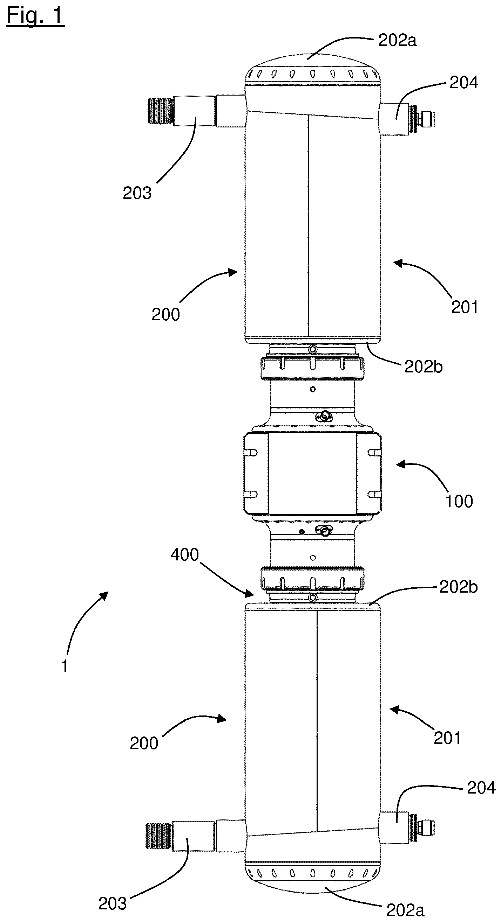

La figure 1 illustre une pompe 1 comprenant un compartiment moteur 100 et au moins un compartiment de pompage 200.

Plus précisément, tel que cela est illustré sur la figure 1, la pompe 1 comprend avantageusement deux compartiments de pompage 200.

Les deux compartiments de pompage 200 sont situés chacun de part et d'autre du compartiment moteur 100.

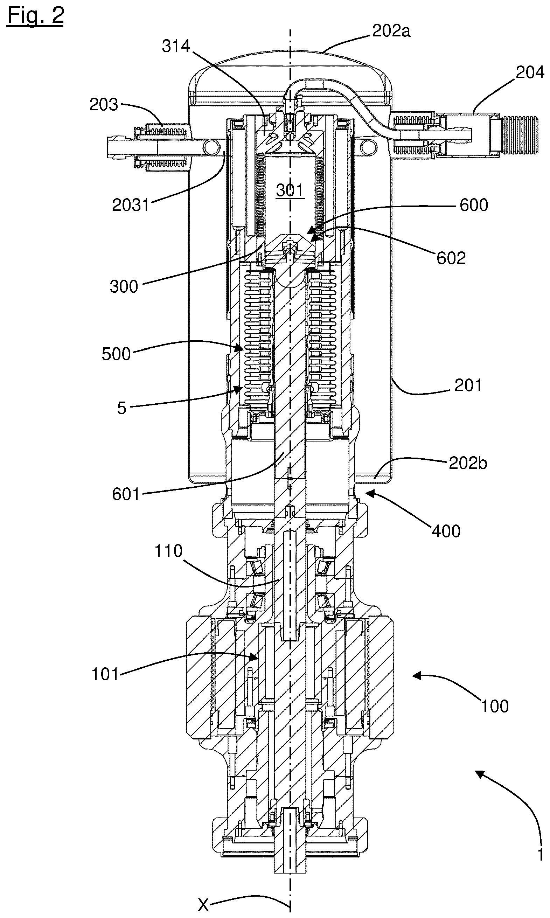

En référence à la figure 2, le compartiment moteur 100 intègre des moyens moteurs 101 en prise avec un arbre de transmission 110 lui-même raccordé au compartiment de pompage 200.

Dans la suite de la description, il n'est fait référence qu'à un seul compartiment de pompage 200, étant entendu que les deux compartiments de pompage 200 sont identiques et présentent les mêmes caractéristiques structurelles et fonctionnelles.

Tel qu'illustré sur la figure 2, le compartiment de pompage 200 comprend un corps de pompe 300 à l'intérieur duquel un piston 600 est monté mobile en translation selon un axe de translation X.

L'axe de translation X définit une direction longitudinale à la pompe 1.

Pour permettre le pompage d'un fluide, le compartiment de pompage 200 comprend également :
- un raccord d'alimentation 203 débouchant dans une rampe d'admission 2031 monté autour du corps de pompe 300, et
- un raccord d'évacuation 204.

Plus particulièrement, la rampe d'admission 2031 se présente sous la forme d'une canalisation annulaire entourant le corps de pompe 300, cette canalisation annulaire ayant une pluralité d'orifices permettant d'alimenter fluidiquement le corps de pompe 300.

En outre, la pompe 1 comprend un compartiment intermédiaire 400 intercalé entre le compartiment moteur 100 et chaque compartiment de pompage 200 ainsi que des moyens d'isolation 500.

Dans le but de protéger le compartiment de pompage 200, la pompe 1 comprend un carter 201 fermé à l'une de ses extrémités par un bouchon 202a.

A l'autre de ses extrémités, le carter 201 s'étend en direction du compartiment moteur 100 et est refermé par un capot 202b permettant de définir un volume interne au carter 201 dans lequel le corps de pompe 300 est logé et protégé.

De préférence, un vide est réalisé dans le volume interne au carter 201.

Tel que cela est visible sur les figures 1 et 2, le raccord d'alimentation 203 et le raccord d'évacuation 204 débouchent chacun dans le carter 201 pour permettre respectivement l'alimentation fluidique et l'extraction de fluide dans ou hors du corps de pompe 300.

La liaison entre l'arbre de transmission 110 et le piston 600 est réalisé par des moyens de couplage mécaniques ad hoc, ces moyens de couplage mécanique pouvant être réversibles, c'est-à-dire qu'ils permettent de dissocier l'arbre de transmission 110 du piston 600.

Avantageusement, les moyens moteurs 101 comprennent une vis à billes ou, plus avantageusement encore, une vis à rouleau.

La vis à billes ou la vis à rouleau permettent de pouvoir transformer un mouvement de rotation des moyens moteurs 101 en un mouvement de translation de l'arbre de transmission 110 et donc du piston 600 dans le corps de pompe 300.

Avantageusement, les moyens moteurs 101 comprennent un moteur à courant continu.

Le corps de pompe 300 définit une chambre fluidique 301 à l'intérieur de laquelle le piston 600 est mobile en translation selon l'axe de translation X.

Par sa mobilité dans la chambre fluidique 301, le piston permet le pompage et l'éjection de fluide depuis une réserve fluidique jusqu'à un réservoir à remplir.

Plus particulièrement, et de manière classique, lorsque le piston se déplace dans un premier sens selon l'axe de translation X, de sorte à augmenter le volume dans la chambre fluidique 301, une dépression se crée à l'intérieur de la chambre fluidique 301 pour permettre l'entrée de fluide dans la chambre fluidique 301 via le raccord d'alimentation 203 et plus particulièrement via la rampe d'admission 2031.

A l'inverse, lorsque le piston 600 se déplace dans un deuxième sens opposé au premier sens, le volume de la chambre fluidique 301 se réduit au fur et à mesure du déplacement du piston 600 dans la chambre fluidique 301, ce qui provoque la compression du fluide contenu dans la chambre fluidique 301 et donc son évacuation du corps de pompe 300 via le raccord d'évacuation 204, à destination du réservoir à remplir.

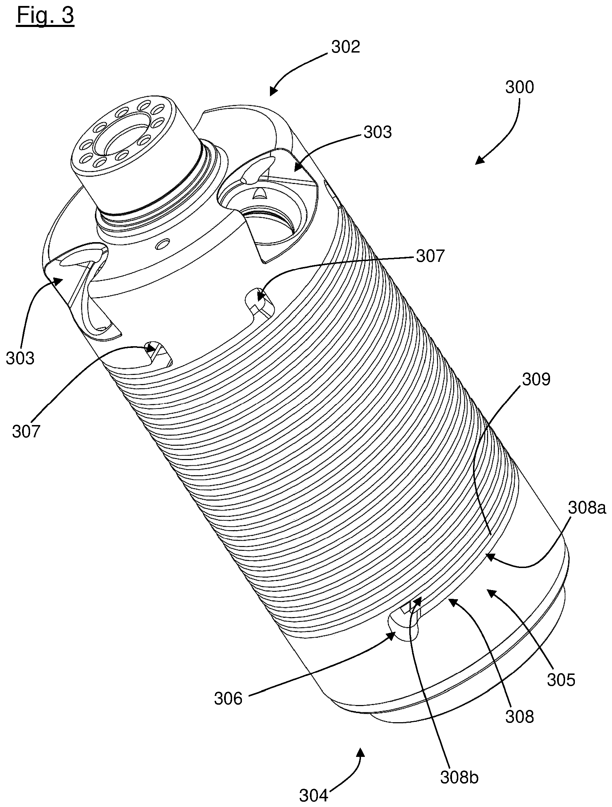

En référence à la figure 3, le corps de pompe 300 est un tube creux cylindrique de révolution présentant une première extrémité 302, close, et une deuxième extrémité 304, ouverte, opposée à la première extrémité.

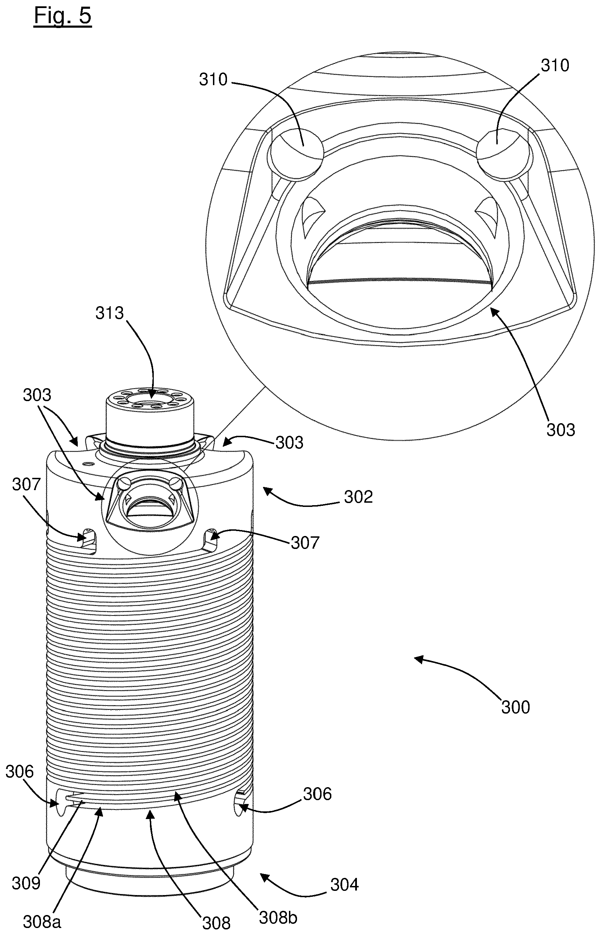

Tel qu'illustré sur la figure 3, la première extrémité 302 présente au moins une tubulure d'admission 303 pour permettre l'entrée du fluide à pomper dans la chambre fluidique 301. Plus précisément, tel qu'on le voit sur les figures 3 et 5 notamment, la première extrémité présente trois tubulures d'admission 303.

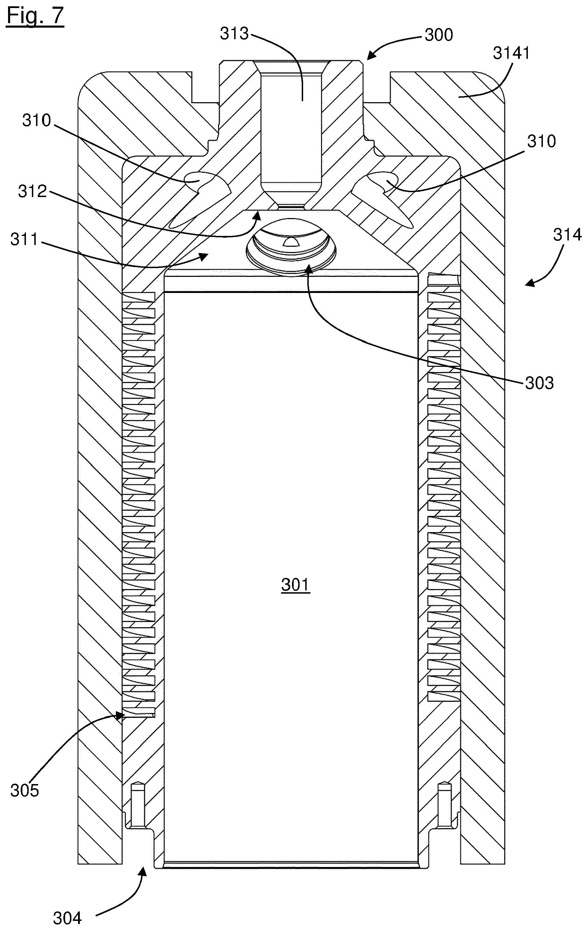

En référence à la figure 7, la pompe 1, et plus particulièrement le compartiment de pompage 200, comprend une chemise 314 entourant le corps de pompe 300.

Plus particulièrement, le corps de pompe 300 est monté dans la chemise 314, sans jeu entre le corps de pompe 300 et la chemise 314.

Cette chemise 314 permet de fermer les tubulures d'admission 303 de sorte à obtenir des tubulures d'admission 300 étanches vis-à-vis de l'extérieur du corps de pompe 300.

Ce corps de pompe 300 est particulièrement adapté au pompage des fluides cryogéniques. Les fluides cryogéniques, notamment à leur état liquide, présentent comme caractéristiques particulières une pression et une température de transfert très basses, par exemple inférieurs à - 250°C.

Ainsi, lors de leur circulation dans les éléments de la pompe 1, les fluides cryogéniques peuvent permettent le refroidissement de la pompe 1.

La compression présente un inconvénient majeur pour les fluides cryogéniques en ce que ceux-ci, par leur détente, peuvent s'auto-enflammer et provoquer un risque d'incendie, voire d'explosion de la pompe.

Il est donc nécessaire de limiter le réchauffement du fluide cryogénique lorsqu'il est pompé, afin de limiter sa détente et donc de limiter les risques d'incendie ou d'explosion de la pompe 1.

Pour cela, tel que cela est visible sur les figures 3, 4, 5 et 7, le corps de pompe 300 comprend au moins une conduite fluidique 305 qui s'étend autour du corps de pompe 300, entre la première extrémité 302 et la deuxième extrémité 304.

Plus particulièrement, la conduite fluidique 305 s'étend en spirale autour du corps de pompe 300.

La conduite fluidique 305 présente une première embouchure 306 de liaison à la réserve fluidique et une deuxième embouchure 307 reliée à une tubulure d'admission 303.

La première embouchure 306 est située au niveau de la deuxième extrémité 304 du corps de pompe 300 et la deuxième embouchure 307 est reliée à la tubulure d'admission 303.

La conduite fluidique 305 permet d'amener le fluide à pomper depuis la réserve fluidique jusqu'à la chambre fluidique 301 du corps de pompe 300 via la conduite fluidique 305.

En référence aux figures 3, 4 et 7, la conduite fluidique 305 est réalisée par une rainure hélicoïdale pratiquée sur une paroi externe du corps de pompe 300.

Toujours en référence à la figure 7, la conduite fluidique 305 est délimitée par le corps de pompe 300, et plus précisément par la rainure hélicoïdale 308, et la chemise 314 qui entoure le corps de pompe 300.

Le fluide à pomper circule donc depuis la première embouchure 306 dans la rainure hélicoïdale 308, en étant piégé contre le corps de pompe 300 par la chemise 314, jusqu'à la deuxième embouchure 307 et donc jusqu'à la tubulure d'admission 303 pour pénétrer dans la chambre fluidique 301.

En référence à la figure 5, le corps de pompe 300 comprend plusieurs conduites fluidiques 305.

En l'espèce, le corps de pompe 300 présente trois conduites fluidiques 305 régulièrement réparties à la périphérie du corps de pompe 300. En variante non illustrée sur les figures, le corps de pompe 300 peut présenter plus de trois conduites fluidiques 305, ou au contraire seulement deux.

Chaque conduite fluidique 305 débouche dans l'une des tubulures d'admission 303.

Autrement dit, pour chaque tubulure d'admission 303, une conduite fluidique 305 est réalisée par l'intermédiaire une rainure hélicoïdale 308 pour permettre une alimentation fluidique de ladite tubulure d'admission 303.

Avantageusement, les trois conduites fluidiques 305 sont parallèles les unes avec les autres.

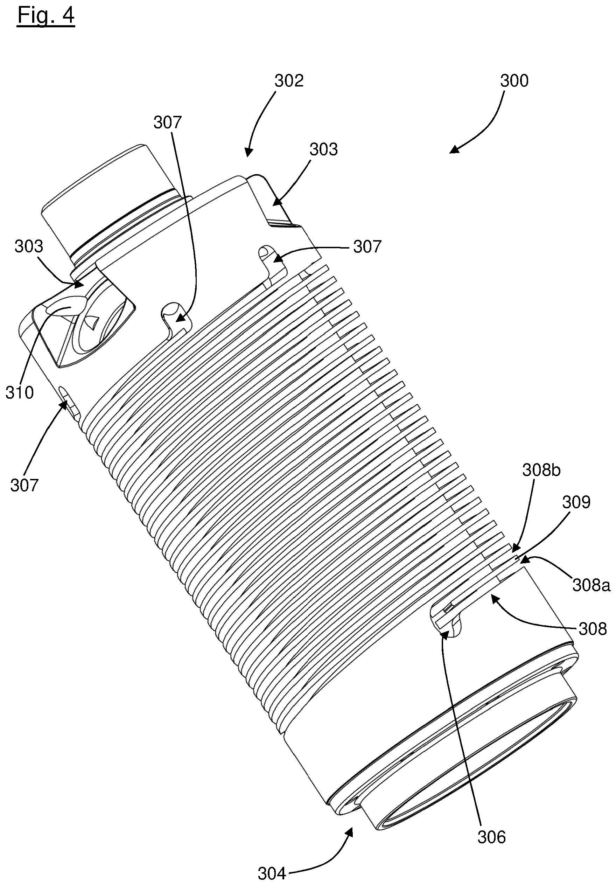

Tel qu'illustré sur les figures 3 et 4, chaque rainure hélicoïdale 308 est divisée en deux sous-rainures 308a, 308b.

Chaque sous-rainure 308a, 308b débouche de part et d'autre de l'une des tubulures d'admission 303.

Autrement dit, une conduite fluidique 305 alimente une tubulure d'admission 303 en deux points.

Une première sous-rainure 308a débouche d'un premier côté de la tubulure d'admission 303 et une deuxième sous-rainure 308b débouche de l'autre côté de la même tubulure 303. Ainsi, le fluide arrive de manière homogène dans la tubulure d'admission 303, ce qui permet à la fois un remplissage rapide de la tubulure d'admission 303 mais également une circulation maîtrisée du fluide dans le corps de pompe jusqu'aux tubulures d'admission 303.

La séparation de la première sous-rainure 308a par rapport à la deuxième sous-rainure 308b est réalisée au moyen d'une paroi centrale 309 qui s'étend depuis le fond de la rainure hélicoïdale 308, c'est-à-dire depuis le corps de pompe 300 jusqu'à la chemise 314.

Chaque sous-rainure 308a, 308b débouche dans la première embouchure 306 et forme une deuxième embouchure 307 distincte des autres embouchures 307.

En d'autres termes, le corps de pompe 300 présente trois conduites fluidiques 305 ayant chacune une première embouchure 306 et deux deuxièmes embouchures 307.

Autrement dit, le corps de pompe 300 , qui comprend trois conduites fluidiques 305, présente trois premières embouchures 306 et six deuxièmes embouchures 307.

Chaque conduite fluidique 305 est reliée à une tubulure d'admission 303 par l'intermédiaire d'un canal 310 au moins, pratiqué dans le corps de pompe 300.

Plus précisément, le canal 310 permet ainsi de relier chaque tubulure d'admission 303 à une deuxième embouchure 307.

Avantageusement, chaque canal 310 est réalisé par au moins un perçage, et de préférence deux perçage séquents l'un avec l'autre.

Un premier perçage étant réalisé depuis la première embouchure 307 et un deuxième perçage est réalisé depuis la tubulure d'admission 303 en direction du premier perçage.

Le corps de pompe 300 est ouvert au niveau de la deuxième extrémité 304 pour permettre l'insertion du piston 600.

La chambre fluidique 301 présente, à la première extrémité 302 du corps de pompe 300, une portion tronconique 311 dans laquelle débouche chacune des tubulures d'admission 303.

Cette portion tronconique 311 présente une face d'extrémité 312 transversale à l'axe de translation X du piston 600 dans le corps de pompe 300.

Le corps de pompe 300 présente également une tubulure d'évacuation 313 débouchant sur la face d'extrémité 312 de la portion tronconique 311.

Au contraire des tubulures d'admission 303 qui sont au nombre de trois dans le corps de pompe 300, le corps de pompe 300 ne comprend qu'une unique tubulure d'évacuation 313 située dans l'axe de translation X du piston 600.

La portion tronconique 311 permet notamment de limiter le volume mort du corps de pompe 300, et également de limiter, voire supprimer, des pertes de charge dans la pompe 1.

Le corps de pompe 300 permet, par la circulation du fluide à pomper, qui est un fluide cryogénique, de pouvoir être refroidi durant le fonctionnement de la pompe 1.

En effet, les déplacements du piston 600 dans le corps de pompe 300 peuvent provoquer un échauffement du corps de pompe 300 et du piston 600 par frottement, cet échauffement étant alors limité, voire supprimé, par la circulation du fluide cryogénique, à une température négative, autour du corps de pompe 300.

Ainsi, les risques de détente du fluide à pomper sont limités, voire supprimés, au bénéfice de la sécurité d'utilisation de la pompe 1.

La figure 1 illustre une pompe 1 comprenant un compartiment moteur 100 et au moins un compartiment de pompage 200.

Plus précisément, tel que cela est illustré sur la figure 1, la pompe 1 comprend avantageusement deux compartiments de pompage 200.

Les deux compartiments de pompage 200 sont situés chacun de part et d'autre du compartiment moteur 100.

En référence à la figure 2, le compartiment moteur 100 intègre des moyens moteurs 101 en prise avec un arbre de transmission 110 lui-même raccordé au compartiment de pompage 200.

Dans la suite de la description, il n'est fait référence qu'à un seul compartiment de pompage 200, étant entendu que les deux compartiments de pompage 200 sont identiques et présentent les mêmes caractéristiques structurelles et fonctionnelles.

Tel qu'illustré sur la figure 2, le compartiment de pompage 200 comprend un corps de pompe 300 à l'intérieur duquel un piston 600 est monté mobile en translation selon un axe de translation X.

L'axe de translation X définit une direction longitudinale à la pompe 1.

Pour permettre le pompage d'un fluide, le compartiment de pompage 200 comprend également :
- un raccord d'alimentation 203 débouchant dans une rampe d'admission 2031 monté autour du corps de pompe 300, et
- un raccord d'évacuation (204).

Plus particulièrement, la rampe d'admission 2031 se présente sous la forme d'une canalisation annulaire entourant le corps de pompe 300, cette canalisation annulaire ayant une pluralité d'orifices permettant d'alimenter fluidiquement le corps de pompe 300.

En outre, la pompe 1 comprend un compartiment intermédiaire 400 intercalé entre le compartiment moteur 100 et chaque compartiment de pompage 200 ainsi que des moyens d'isolation 500.

Dans le but de protéger le compartiment de pompage 200, la pompe 1 comprend un carter 201 fermé à l'une de ses extrémités par un bouchon 202a.

A l'autre de ses extrémités, le carter 201 s'étend en direction du compartiment moteur 100 et est refermé par un capot 202b permettant de définir un volume interne au carter 201 dans lequel le corps de pompe 300 est logé et protégé.

De préférence, un vide est réalisé dans le volume interne au carter 201.

Tel que cela est visible sur les figures 1 et 2, le raccord d'alimentation 203 et le raccord d'évacuation 204 débouchent chacun dans le carter 201 pour permettre respectivement l'alimentation fluidique et l'extraction de fluide dans ou hors du corps de pompe 300.

La liaison entre l'arbre de transmission 110 et le piston 600 est réalisé par des moyens de couplage mécaniques ad hoc, ces moyens de couplage mécanique pouvant être réversibles, c'est-à-dire qu'ils permettent de dissocier l'arbre de transmission 110 du piston 600.

Avantageusement, les moyens moteurs 101 comprennent une vis à billes ou, plus avantageusement encore, une vis à rouleau.

La vis à billes ou la vis à rouleau permettent de pouvoir transformer un mouvement de rotation des moyens moteurs 101 en un mouvement de translation de l'arbre de transmission 110 et donc du piston 600 dans le corps de pompe 300.

Avantageusement, les moyens moteurs 101 comprennent un moteur à courant continu.

Le corps de pompe 300 définit une chambre fluidique 301 à l'intérieur de laquelle le piston 600 est mobile en translation selon l'axe de translation X.

Par sa mobilité dans la chambre fluidique 301, le piston 600 permet le pompage et l'éjection de fluide depuis une réserve fluidique jusqu'à un réservoir à remplir.

Plus particulièrement, et de manière classique, lorsque le piston 600 se déplace dans un premier sens selon l'axe de translation X, de sorte à augmenter le volume dans la chambre fluidique 301, une dépression se crée à l'intérieur de la chambre fluidique 301 pour permettre l'entrée de fluide dans la chambre fluidique 301 via le raccord d'alimentation 203 et plus particulièrement via la rampe d'admission 2031.

A l'inverse, lorsque le piston 600 se déplace dans un deuxième sens opposé au premier sens, le volume de la chambre fluidique 301 se réduit au fur et à mesure du déplacement du piston 600 dans la chambre fluidique 301, ce qui provoque la compression du fluide contenu dans la chambre fluidique 301 et donc son évacuation du corps de pompe 300 via le raccord d'évacuation 204, à destination du réservoir à remplir.

Le corps de pompe 300 est ouvert au niveau de la deuxième extrémité 304 pour permettre l'insertion du piston 600.

La chambre fluidique 301 présente, à la première extrémité 302 du corps de pompe 300, une portion tronconique 311 dans laquelle débouche chacune des tubulures d'admission 303.

Cette portion tronconique 311 présente une face d'extrémité 312 transversale à l'axe de translation X du piston 600 dans le corps de pompe 300.

Le corps de pompe 300 présente également une tubulure d'évacuation 313 débouchant sur la face d'extrémité 312 de la portion tronconique 311.

Au contraire des tubulures d'admission 303 qui sont au nombre de trois dans le corps de pompe 300, le corps de pompe 300 comprend une unique tubulure d'évacuation 313 située dans l'axe de translation X du piston 600.

La portion tronconique 311 permet notamment de limiter le volume mort du corps de pompe 300, et également de limiter, voire supprimer, des pertes de charge dans la pompe 1.

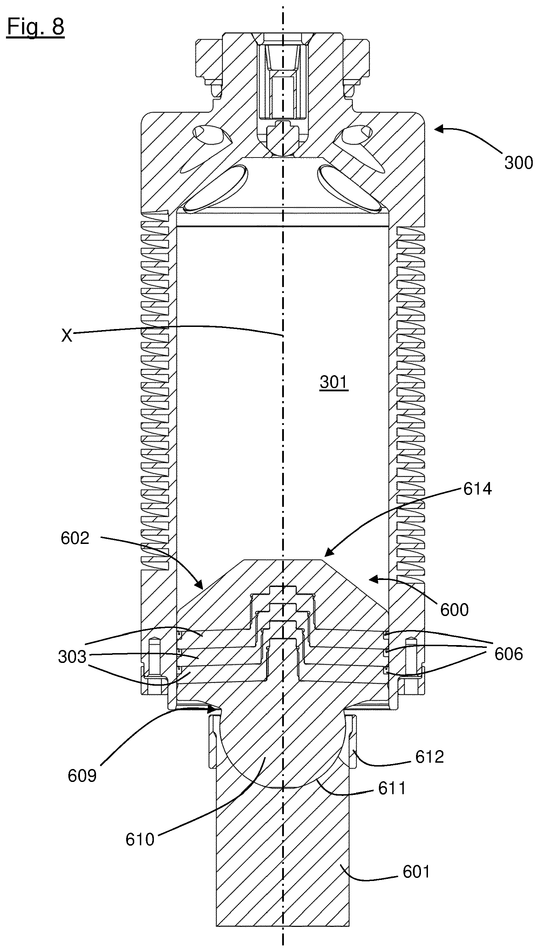

En référence à la figure 8, le piston 600 comprend une tige 601 et une tête 602 raccordée à la tige 601.

Lors de son déplacement en translation, le piston 600 frotte contre les parois du corps de pompe 300, ce qui peut provoquer un échauffement du corps de pompe 300 et/ou du piston 600.

Pour éviter ces problèmes classiquement connus, le piston 600 de la pompe 1 selon l'invention comprend :
- au moins deux disques 603 superposés l'un sur l'autre ;
- un joint annulaire continu 606 logé entre les deux disques 603.

Chaque disque 603 présente une face supérieure 604 et une face inférieure 605 opposées l'une à l'autre.

Les faces supérieures 604 et les faces inférieures 605 sont avantageusement transversales à l'axe de translation X du piston 600 dans le corps de pompe 300.

Chaque disque 603 présente, en son centre, un trou 6031 débouchant sur la face inférieure 605.

L'un au moins des disques 603 présente une saillie 6032 s'étendant depuis la face supérieure 604.

La saillie 6032 est destinée à venir coopérer avec le trou 6031 d'un autre disque 603 pour permettre l'assemblage entre eux des deux disques 603.

Le joint annulaire continu 606 est alors intercalé entre les deux disques 603 lorsque ceux-ci sont assemblés.

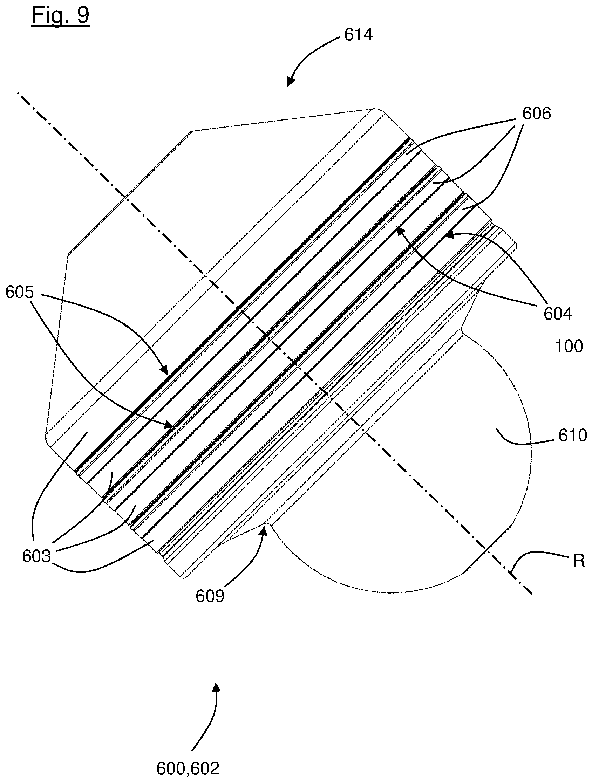

En référence aux figures 8, 9 et 10, le piston 600 comprend également au moins un troisième disque 603.

Le troisième disque 603 présente également, à l'instar des deux premiers disques 603, une face supérieure 604 et une face inférieure 605 opposée l'une par rapport à l'autre.

Sur ce troisième disque 603, une saillie 6032 s'étend depuis la face supérieure 604 et un trou 6031 est pratiqué, dans le troisième disque 603, depuis la face inférieure 605.

Le piston 600 comprend également un deuxième joint annulaire continu 606 intercalé entre l'assemblage des deux premiers disques 603 et le troisième disque 603.

Autrement dit, un joint annulaire continu 606 est intercalé entre deux disques 603 assemblés.

Plus particulièrement, l'assemblage de deux disques 603 entre eux se fait par coopération de la saillie 6032 de l'un des disques 603 avec le trou 6031 de l'autre des disques 603.

Préférentiellement, chaque trou 6031 présente un taraudage interne et chaque saillie 6032 présente un filetage externe.

Ainsi, pour l'assemblage de deux disques 603 entre eux, le filetage externe de la saillie 6032 vient coopérer hélicoïdalement avec le taraudage interne du trou 6031.

En variante, la coopération entre la saillie 6032 et le trou 6031 pourrait être réalisée par un emboîtement à force et donc une coopération de forme.

En outre, selon une autre variante, une colle pourrait être utilisée pour maintenir la saillie 6032 dans un trou 6031.

En référence à la figure 8, le premier disque 603 est un disque de tête destiné à être en contact du fluide à pomper.

La face supérieure 604 du disque 603 de tête présente de préférence une forme tronconique 614. Cette forme tronconique 614 est à l'empreinte de la portion tronconique 311 de la chambre fluidique 301 du corps de pompe 300.

La forme tronconique 614 du disque 603 permet de pouvoir maximiser le rendement de la pompe 1.

En effet, la coopération de forme entre la portion tronconique 311 du corps de pompe 300 et la forme tronconique 614 du disque 603 de tête permet de limiter le volume mort dans le corps de pompe, c'est-à-dire un volume dans lequel le fluide compressé n'est pas ou peu comprimé.

Par ailleurs, cela permet d'éviter une compression trop importante du fluide pompé, notamment si celui-ci présente un risque d'échauffement ou de combustion.

De préférence, l'un au moins des disques 603 présente sur sa face supérieure 604 un épaulement 613.

Plus particulièrement, à l'exception du disque 603 de tête, chaque disque 603 présente un épaulement 613.

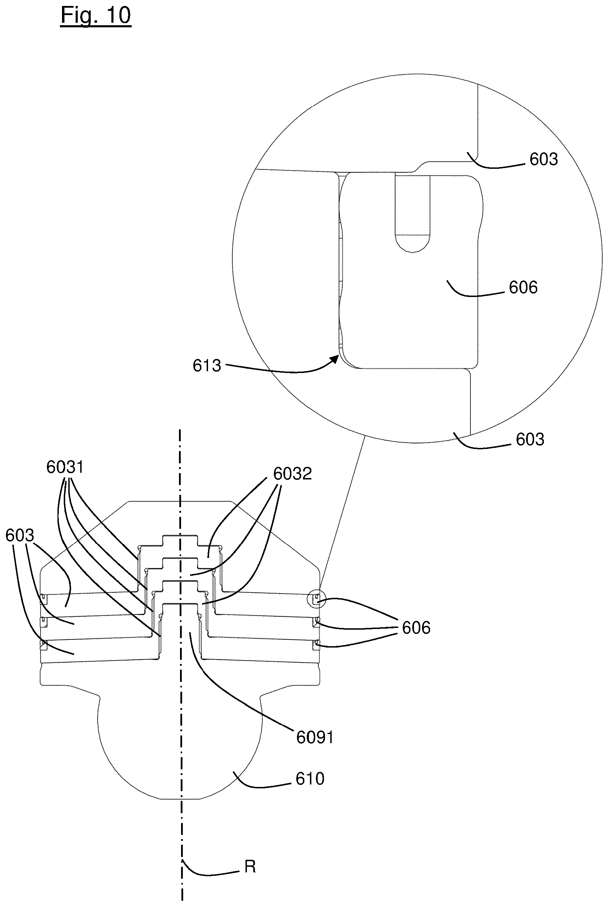

En référence au médaillon de détail de la figure 10, les joints annulaires continus 606 sont reçus dans les épaulements 613 de chaque disque 603.

Cela permet notamment de positionner de manière précise le joint annulaire continu 606 entre deux disques 603 assemblés.

Tel qu'illustré sur les figures 8, 9 et 10, le piston 600 comprend également une pièce de raccordement 609 permettant le raccordement de la tête de piston 602 à la tige 601.

La pièce de raccordement 609 présente en son centre, une saillie 6091 destinée à coopérer avec le trou 6031 de l'un des disques 603.

Plus précisément, le pion 6091 présente un filetage externe destiné à coopérer avec le taraudage interne du trou 6031 d'un disque 603.

A l'opposé du pion 6091, la pièce de raccordement 609 présente une portion de raccordement 610.

Tel qu'illustré sur les figures 8, 9 et 10, la portion de raccordement 610 présente une forme sphérique destinée à être reçue dans une cavité sphérique 611 de la tige 601.

Avantageusement, la tige 601 présente, au droit de la cavité sphérique 611, au moins une ligne de découpe permettant à la tige 601 de pouvoir être déformée pour recevoir la portion de raccordement 610 de la pièce de raccordement 609.

Le piston 600 comprend également une bague de serrage 612 venant coopérer avec la tige 601 au droit de la cavité sphérique 611, à l'extérieur de cette dernière.

La coopération de la bague de serrage 612 avec la tige 601 permet de pouvoir maintenir dans la cavité sphérique 611 la portion de raccordement 610 de la pièce de raccordement 609.

En référence au médaillon de détail de la figure 10, chaque joint annulaire continu 606 présente une section longitudinale en forme de U.

Le U s'ouvre selon une direction parallèle à un axe de révolution R du joint annulaire continu 606.

L'axe de révolution R est destiné à être confondu avec l'axe de translation X du piston 600 lorsque le piston 600 est monté dans le corps de pompe 300.

La forme en U permet au joint annulaire continu 606 de pouvoir se déformer par la température et/ou par la compression entre deux disques. La déformation du joint annulaire continu 606 peut ainsi être contrôlée et maîtrisée.

En effet, lorsque l'assemblage de deux disques 603 l'un avec l'autre est réalisé, le joint annulaire continu 606, qui est alors reçu dans l'épaulement 613, est compressé entre la face supérieure 604 d'un disque 603 et la face inférieure 605 d'un autre disque 603.

Par les températures froides du fluide à pomper, le joint annulaire continu 606 peut se rétracter sans risque de se rompre ou de s'abîmer.

Avantageusement, chaque disque 603 est réalisé en invar.

Ce matériau permet de résister aux très faibles températures des fluides tels que les fluides cryogéniques.

De même, chaque joint annulaire continu 606 est réalisé dans un matériau de la famille des polyimides. Les polyimides permettent de résister à une plage étendue de températures sans que leurs caractéristiques n'en soient modifiées, ou quasiment.

Lorsque le piston 600 est monté dans le corps de pompe 300, le ou chaque joint annulaire continu 606 est au contact d'une paroi interne du corps de pompe 300.

Lorsque le piston est assemblé, tel qu'illustré figure 10, les trous 6031 et les saillies 6032 des disques 603 sont coaxiaux les uns avec les autres.

Cela permet de garantir une bonne étanchéité entre les différents disques 603 et entre les disques 603 et les joints annulaires continus 606.

Avantageusement, la coaxialité des saillies 6032 et des trous 6031 est réalisée selon l'axe de révolution R des joints annulaires continus 606.

La figure 1 illustre une pompe 1 comprenant un compartiment moteur 100 et au moins un compartiment de pompage 200.

Plus précisément, tel que cela est illustré sur la figure 1, la pompe 1 comprend avantageusement deux compartiments de pompage 200 situés chacun de part et d'autre du compartiment moteur 100.

En référence à la figure 2, le compartiment moteur 100 intègre des moyens moteurs 101 en prise avec un arbre de transmission 110 lui-même raccordé au compartiment de pompage 200.

Dans la suite de la description, il n'est fait référence qu'à un seul compartiment de pompage 200, étant entendu que les deux compartiments de pompage 200 sont identiques et présentent les mêmes caractéristiques structurelles et fonctionnelles.

Tel qu'illustré sur la figure 2, le compartiment de pompage 200 comprend un corps de pompe 300 à l'intérieur duquel un piston 600 est monté mobile en translation selon un axe de translation X.

L'axe de translation X définit une direction longitudinale à la pompe 1.

Pour permettre le pompage d'un fluide, le compartiment de pompage 200 comprend également :
- un raccord d'alimentation 203 débouchant dans une rampe d'admission 2031 monté autour du corps de pompe 300, et
- un raccord d'évacuation 204.

Plus particulièrement, la rampe d'admission 2031 se présente sous la forme d'une canalisation annulaire entourant le corps de pompe 300, cette canalisation annulaire ayant une pluralité d'orifices permettant d'alimenter fluidiquement le corps de pompe 300.

En outre, la pompe 1 comprend un compartiment intermédiaire 400 intercalé entre le compartiment moteur 100 et chaque compartiment de pompage 200 ainsi que des moyens d'isolation 500.

Dans le but de protéger le compartiment de pompage 200, la pompe 1 comprend un carter 201 fermé à l'une de ses extrémités par un bouchon 202a.

A l'autre de ces extrémités, le carter 201 s'étend en direction du compartiment moteur et est refermé par un capot 202b permettant de définir un volume interne au carter 201 dans lequel le corps de pompe 300 est logé et protégé.

De préférence, un vide est réalisé dans le volume interne au carter 201.

Tel que cela est visible sur les figures 1 et 2, le raccord d'alimentation 203 et le raccord d'évacuation 204 débouchent chacun dans le carter 201 pour permettre respectivement l'alimentation fluidique et l'extraction de fluide dans ou hors du corps de pompe 300.

La liaison entre l'arbre de transmission 110 et le piston 600 est réalisé par des moyens de couplage mécaniques ad hoc, ces moyens de couplage mécanique pouvant être réversibles, c'est-à-dire qu'ils permettent de dissocier l'arbre de transmission 110 du piston 600.

Avantageusement, les moyens moteurs 101 comprennent une vis à billes ou, plus avantageusement encore, une vis à rouleau.

La vis à billes ou la vis à rouleau permettent de pouvoir transformer un mouvement de rotation des moyens moteurs 101 en un mouvement de translation de l'arbre de transmission 110 et donc du piston 600 dans le corps de pompe 300.

Avantageusement, les moyens moteurs 101 comprennent un moteur à courant continu. Le corps de pompe 300 définit une chambre fluidique 301 à l'intérieur de laquelle le piston 600 est mobile en translation selon l'axe de translation X.

Par sa mobilité dans la chambre fluidique 301, le piston permet le pompage et l'éjection de fluide depuis une réserve fluidique jusqu'à un réservoir à remplir.

Plus particulièrement, et de manière classique, lorsque le piston se déplace dans un premier sens selon l'axe de translation X, de sorte à augmenter le volume dans la chambre fluidique 301, une dépression se crée à l'intérieur de la chambre fluidique 301 pour permettre l'entrée de fluide dans la chambre fluidique 301 via le raccord d'alimentation 203 et plus particulièrement via la rampe d'admission 2031.

A l'inverse, lorsque le piston 600 se déplace dans un deuxième sens opposé au premier sens, le volume de la chambre fluidique 301 se réduit au fur et à mesure du déplacement du piston 600 dans la chambre fluidique 301, ce qui provoque la compression du fluide contenu dans la chambre fluidique 301 et donc son évacuation du corps de pompe 300 via le raccord d'évacuation 204, à destination du réservoir à remplir.

Dans le cadre du pompage d'un fluide de type cryogénique, les pièces de la pompe 1 sont soumises à des températures extrêmes notamment des températures froides qui peuvent causer leur rétraction.

Pour limiter cela, et notamment limiter la rétraction des pièces qui ne sont pas en contact direct avec le fluide à pomper, des moyens d'isolation thermique 500 sont utilisés dans la pompe 1.

Par ailleurs, l'utilisation des moyens d'isolation thermique 500 permet de limiter le coût de la pompe 1 puisque les matériaux classiques d'une pompe peuvent être utilisés sans risque pour l'intégrité structurelle de la pompe.

La transmission de température peut s'effectuer, selon un premier moyen, par conduction thermique. Autrement dit, les pièces qui sont en contact les unes avec les autres se transmettent la température.

Par conséquent, avec une pièce froide en contact avec une autre pièce plus chaude, il se produit un transfert thermique de sorte que la pièce froide se réchauffe et la pièce plus chaude se refroidie.

Un autre moyen d'échange de température connu est le rayonnement thermique.

Dans ce cas, l'échange de température entre la première pièce et une deuxième pièce se fait sans contact du simple fait que la température chaude de la première pièce provoque un rayonnement de température autour de ladite première pièce, ce qui provoque le réchauffement de la deuxième pièce.

La transmission de calories peut entraîner des fuites dans la pompe 1 par la contraction thermique ou de la dilatation thermique de ses pièces. Ces fuites peuvent être dangereuses pour le fonctionnement de la pompe 1 en tant que tel ou pour l'environnement externe à la pompe 1 puisque, dans le cas du pompage d'un fluide cryogénique, la détente de ce fluide peut provoquer sa combustion immédiate, ce qui peut, dans le pire des cas, engendrer l'explosion de la pompe1.

Pour limiter la transmission calorifique par conduction et/ou la rétraction des pièces en contact direct avec le fluide cryogénique à pomper, des matériaux faiblement conducteurs ou non conducteurs peuvent être utilisés.

A titre d'exemple, la tête 602 du piston 600 peut être réalisée en invar et la tige 601 du piston 600 peut être réalisée dans un matériau composite par exemple un matériau composite à base de résine époxy et de fibre de verre.

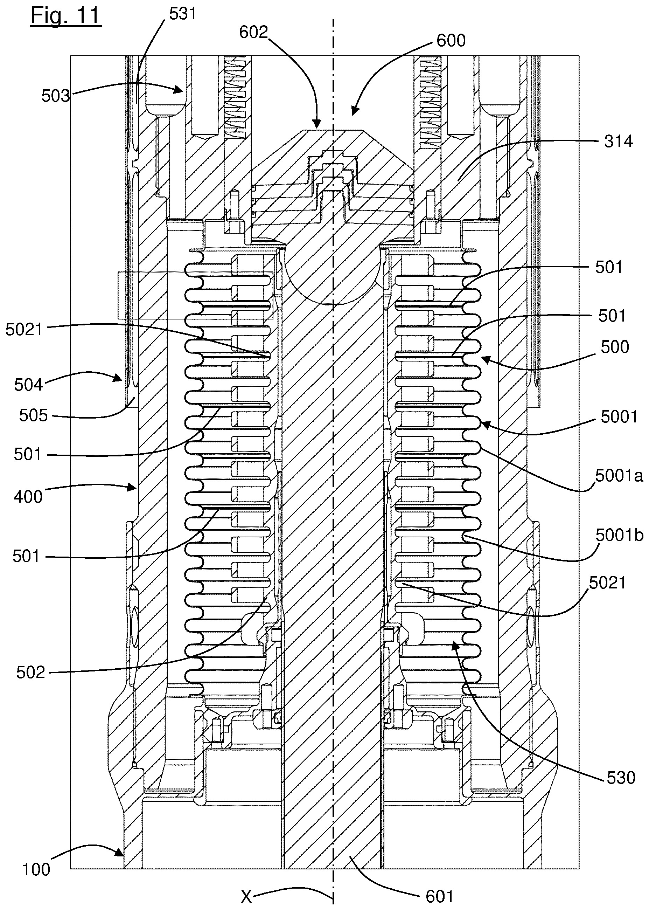

Tel qu'illustré sur la figure 11 notamment, le compartiment intermédiaire 400 se présente sous la forme d'une entretoise tubulaire reliant le compartiment de pompage 200 et le compartiment moteur 100.

Les moyens d'isolation thermique 500 comprennent un élément tubulaire 5001 logé dans le compartiment intermédiaire 400 et s'étendant autour de la tige 601 du piston 600, selon l'axe de translation X.

L'élément tubulaire 5001 s'étend entre le compartiment de pompage 200 et le compartiment moteur 100.

Tel qu'on le voit sur la figure 11, l'élément tubulaire 5001 définit avec l'entretoise un espace 530 pour limiter le rayonnement radial de la tige 601 du piston 600 vers l'extérieur de la pompe 1.

Tel que cela est visible sur la figure 11, l'élément tubulaire 5001 présente, autour de l'axe de translation X, un profil de révolution comprenant une alternance de crêtes 5001a et de creux 5001b par rapport à l'axe de translation X.

Autrement dit, l'élément tubulaire présente une paroi présentant des corrugations.

En d'autres termes, l'élément tubulaire 5001 forme un soufflet élastiquement déformable pour pouvoir maintenir un espace 530 clos autour de la tige 601 du piston 600 entre le compartiment moteur 100 et le compartiment de pompage 200 indépendamment de l'écartement relatif entre le compartiment moteur 100 et le compartiment de pompage 200. Un tel écartement relatif peut être dû aux différences de températures lors du fonctionnement de la pompe 1.

Les éléments ou les moyens d'isolation thermique 500 comprennent également au moins un disque en matériau isolant 501.

Le disque en matériau isolant 501 est positionné à l'intérieur de l'élément tubulaire 5001 et s'étend transversalement à l'axe de translation X.

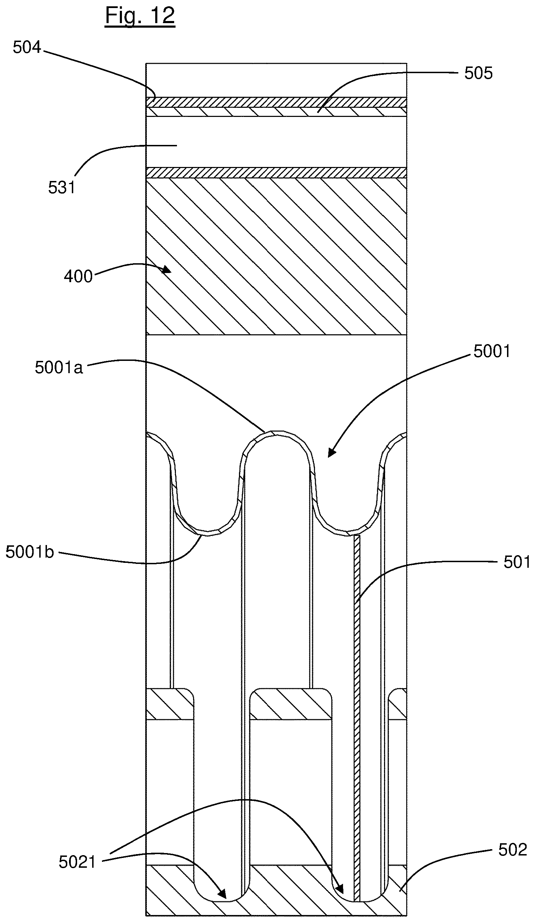

Plus particulièrement, tel que cela est visible sur la figure 11, et sur le détail de la figure 12, le disque en matériau isolant 501 s'étend depuis la tige 601 du piston 600 jusqu'à l'élément tubulaire 5001.

Pour permettre de maintenir les disques en matériau isolant 501 en position dans la pompe 1, la pompe 1 comprend également une pièce support tubulaire 502 présentant une série de rainures annulaires 5021.

La pièce support tubulaire 502 est solidaire du compartiment moteur 100 et entoure la tige 601 du piston 600.

La série de rainures annulaires 5021 s'étend ainsi transversalement à l'axe de translation X. Tel que cela est visible sur les figures 11 et 12, le ou chaque disque en matériau isolant 501 est monté dans l'une des rainures 5021 de la pièce support tubulaire 502.

De préférence, et tel que cela est illustré sur la figure 11, la pompe 1 comprend une pluralité de disques en matériau isolant 501.

Encore plus précisément, la pompe 1 comprend 5 disques en matériau isolant 501.

Chaque disque est reçu dans une rainure annulaire 5021 de la pièce support tubulaire 502. Ainsi, chacun des disques en matériau isolant 501 s'étend radialement à la tige 601 du piston 600. Par radialement, il est entendu une direction transversale à l'axe de translation X.

En référence à la figure 12, chaque disque en matériau isolant 501 s'étend depuis le fond d'une rainure 5021 jusqu'à un creux 5001b de l'élément tubulaire 5001.

Cela permet de limiter l'extension radiale des disques en matériau isolant 501, et de confiner les températures pour limiter le rayonnement axialement à l'axe de translation X. Tel que cela est illustré sur la figure 1, les moyens d'isolation thermique 500 comprennent de plus une première couche en matériau isolant 503.

Cette première couche en matériau isolant 503 est positionnée autour du corps de pompe 300 et forme un fourreau autour du corps de pompe 300.

Cette première couche 503 en matériau isolant permet d'éviter le rayonnement du corps de pompe 300 vers l'extérieur de la pompe 1.

Selon la vue de détails de la figure 12, les moyens d'isolation thermique 500 comprennent en outre une deuxième couche en matériau isolant 504.

Cette deuxième couche en matériau isolant 504 est positionnée autour de l'élément tubulaire 5001 à cheval sur l'élément tubulaire 5001 et le corps de pompe 300.

Plus particulièrement, cette deuxième couche en matériau isolant 504 est située dans le carter 201 et s'étend axialement le long de l'axe de translation X autour du corps de pompe 300 et d'une partie du compartiment intermédiaire 400.

Entre la première couche en matériau isolant 503 et la deuxième couche en matériau isolant 504, un espace périphérique 531 est créé.

Plus particulièrement, la deuxième couche 504 en matériau isolant est portée par un support tubulaire 505 s'étendant autour du corps de pompe et une partie du compartiment intermédiaire 400.

Le support tubulaire 505 est écarté radialement du corps de pompe 300 et du compartiment intermédiaire 400 pour définir avec eux l'espace périphérique 531.

Les espaces 530, 531 mentionnés permettent de réaliser une isolation par le vide entre les différentes pièces.

De préférence, le matériau isolant utilisé pour la première couche 503, la deuxième couche 504 et les disques en matériau isolant 501 est un polytéréphtalate d'éthylène aluminisé (PET aluminisé).

Avantageusement, l'un au moins de l'élément tubulaire 5001, du compartiment intermédiaire 400 et de la tige 601 et du piston 600 est réalisé dans un matériau composite. Le matériau composite est avantageusement un matériau comprenant un renfort en fibre de verre noyé dans une résine époxy.

L'isolation obtenue par les moyens d'isolation thermique 500 permet de pouvoir augmenter la durée des cycles de pompage de la pompe 1 puisque les différentes pièces ne sont pas ou peu impactées par la température du fluide cryogénique qui est pompé.

En effet, seules les pièces destinées à être en contact du fluide cryogénique peuvent être réalisées dans des matériaux peu impactés par des températures négatives, le reste des éléments de la pompe pouvant être réalisé dans un matériau classique tel que de l'aluminium ou de l'acier ou encore un matériau composite.

Enfin, les moyens d'isolation thermique 500 permettent de limiter les effets néfastes dû au rayonnement thermique des pièces qui peut provoquer du givre à la surface de la pompe 1 et provoquer des ruptures mécaniques dans certaines pièces sensibles aux changements de températures.

La figure 1 illustre une pompe 1 comprenant un compartiment moteur 100 et au moins un compartiment de pompage 200.

Plus précisément, tel que cela est illustré sur la figure 1, la pompe 1 comprend avantageusement deux compartiments de pompage 200.

Les deux compartiments de pompage 200 sont situés chacun de part et d'autre du compartiment moteur 100.

En référence à la figure 2, le compartiment moteur 100 intègre des moyens moteurs 101 en prise avec un arbre de transmission 110 lui-même raccordé au compartiment de pompage 200.

Dans la suite de la description, il n'est fait référence qu'à un seul compartiment de pompage 200, étant entendu que les deux compartiments de pompage 200 sont identiques et présentent les mêmes caractéristiques structurelles et fonctionnelles.

Tel qu'illustré sur la figure 2, le compartiment de pompage 200 comprend un corps de pompe 300 à l'intérieur duquel un piston 600 est monté mobile en translation selon un axe de translation X. Le piston comprend classiquement une tige 601 et une tête 602.

L'axe de translation X définit une direction longitudinale à la pompe 1.

Pour permettre le pompage d'un fluide, le compartiment de pompage 200 comprend également :
- un raccord d'alimentation 203 débouchant dans une rampe d'admission 2031 monté autour du corps de pompe 300, et
- un raccord d'évacuation 204.

Plus particulièrement, la rampe d'admission 2031 se présente sous la forme d'une canalisation annulaire entourant le corps de pompe 300, cette canalisation annulaire ayant une pluralité d'orifices permettant d'alimenter fluidiquement le corps de pompe 300.

En outre, la pompe 1 comprend un compartiment intermédiaire 400 intercalé entre le compartiment moteur 100 et chaque compartiment de pompage 200 ainsi que des moyens d'isolation 500.

Dans le but de protéger le compartiment de pompage 200, la pompe 1 comprend un carter 201 fermé à l'une de ses extrémités par un bouchon 202a.

A l'autre de ses extrémités, le carter 201 s'étend en direction du compartiment moteur 100et est refermé par un capot 202b permettant de définir un volume interne au carter 201 dans lequel le corps de pompe 300 est logé et protégé.

De préférence, un vide est réalisé dans le volume interne au carter 201.

Tel que cela est visible sur les figures 1 et 2, le raccord d'alimentation 203 et le raccord d'évacuation 204 débouchent chacun dans le carter 201 pour permettre respectivement l'alimentation fluidique et l'extraction de fluide dans ou hors du corps de pompe 300.

La liaison entre l'arbre de transmission 110 et le piston 600 est réalisé par des moyens de couplage mécaniques ad hoc, ces moyens de couplage mécanique pouvant être réversibles, c'est-à-dire qu'ils permettent de dissocier l'arbre de transmission 110 du piston 600.

Avantageusement, les moyens moteurs 101 comprennent une vis à billes ou, plus avantageusement encore, une vis à rouleau.

La vis à billes ou la vis à rouleau permettent de pouvoir transformer un mouvement de rotation des moyens moteurs 101 en un mouvement de translation de l'arbre de transmission 110 et donc du piston 600 dans le corps de pompe 300.

Avantageusement, les moyens moteurs 101 comprennent un moteur à courant continu. Le corps de pompe 300 définit une chambre fluidique 301 à l'intérieur de laquelle le piston 600 est mobile en translation selon l'axe de translation X.

Par sa mobilité dans la chambre fluidique 301, le piston permet le pompage et l'éjection de fluide depuis une réserve fluidique jusqu'à un réservoir à remplir.

Plus particulièrement, et de manière classique, lorsque le piston se déplace dans un premier sens selon l'axe de translation X, de sorte à augmenter le volume dans la chambre fluidique 301, une dépression se crée à l'intérieur de la chambre fluidique 301 pour permettre l'entrée de fluide dans la chambre fluidique 301 via le raccord d'alimentation 203 et plus particulièrement via la rampe d'admission 2031.

A l'inverse, lorsque le piston 600 se déplace dans un deuxième sens opposé au premier sens, le volume de la chambre fluidique 301 se réduit au fur et à mesure du déplacement du piston 600 dans la chambre fluidique 301, ce qui provoque la compression du fluide contenu dans la chambre fluidique 301 et donc son évacuation du corps de pompe 300 via le raccord d'évacuation 204, à destination du réservoir à remplir.

Le mouvement et la vitesse de déplacement du piston 600 dans le corps de pompe 300 peuvent être modulés pour permettre un remplissage du réservoir à remplir optimal en fonction du temps disponible pour le remplissage du réservoir à remplir, mais également en fonction du type de fluide à pomper et notamment de ses caractéristiques intrinsèques.

En effet, certains fluides ne peuvent pas être compressés, ou quasiment, tandis que d'autres peuvent l'être de manière importante, et certains fluides présentent des caractéristiques telles qu'en cas de manipulation trop brutale, par exemple compression ou détente trop rapides, ces fluides peuvent s'enflammer, voire créer une explosion qui peut endommager la pompe 1.

Il est donc nécessaire de pouvoir moduler la vitesse de déplacement du piston 600 dans le corps de pompe 300.

Le pompage d'un fluide du type cryogénique peut par exemple entraîner la rétraction des pièces qui sont en contact avec les fluides.

C'est notamment le cas du corps de pompe 301 ou même et plus fréquemment du piston 600, notamment de sa tête 602.

Une rétraction des éléments, notamment de la tige 601 et de la tête 602 du piston 600 peut provoquer une baisse de rendement de la pompe 1.

Dans le cas d'un fluide cryogénique présentant une détente pouvant provoquer sa combustion immédiate, il est nécessaire de conserver une course constante, ou quasiment, du piston 600 pour éviter toute détente du fluide cryogénique qui pourrait alors provoquer une explosion de la pompe 1 dans le pire des cas.

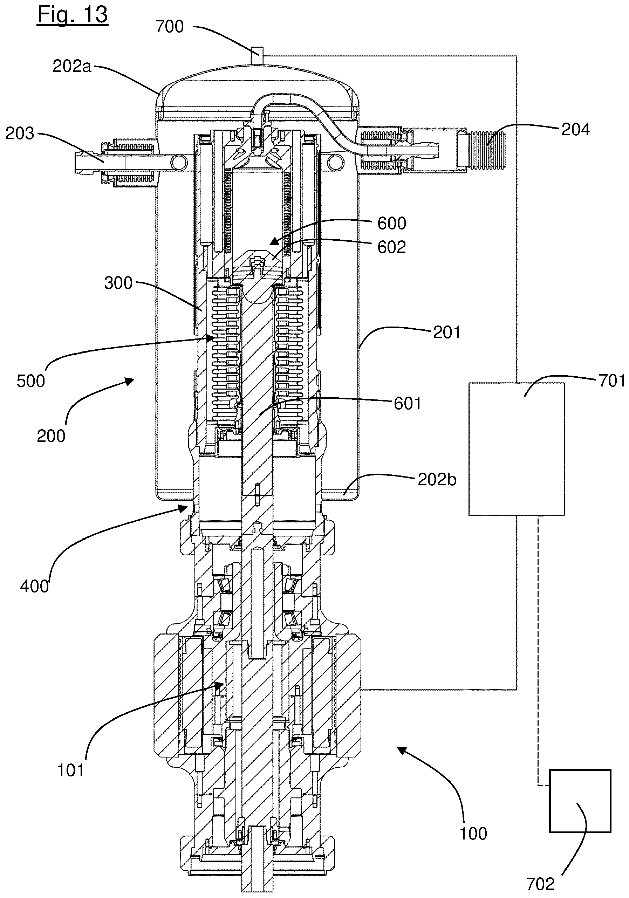

Pour cela, la pompe 1 est équipée de moyens de réglage de la course du piston 600, comme illustré sur la figure 13.

Les moyens de réglage de la course du piston 600 comprennent :
- un capteur de fin de course 700 du piston 600 ;
- un calculateur 701 relié au capteur de fin de course 700 et aux moyens moteur 101.

Le calculateur 701 est avantageusement paramétré pour générer et transmettre une consigne de fonctionnement aux moyens moteur 101 à partir d'un signal de sortie du capteur de fin de course 700 et ainsi ajuster la course du piston 600 dans le corps de pompe 300 selon une course nominale prédéfinie.

En effet, lorsque le piston 600 se rétracte, sa course dans le corps de pompe 300 se trouve diminuée.

A titre d'exemple, lorsque la rétraction du piston 60 est d'un millimètre, la course de déplacement du piston dans le corps de pompe 300 est réduite d'autant, c'est-à-dire d'un millimètre.

Il en résulte alors un manque de compression du fluide dans la pompe 1 et donc une baisse de rendement de la pompe 1, l'intégralité du fluide pompé n'étant alors pas évacué lors de la phase d'évacuation.

Il est donc nécessaire de pouvoir rallonger la course du piston 600, ou au contraire de la rétrécir, afin de conserver une course du piston 600 sensiblement égale à la course nominale prédéfinie et pour laquelle le rendement de la pompe 1 est maximal.

Pour cela, le capteur de fin de course 700 est un capteur du type accéléromètre.

Le capteur de fin de course 700 est positionné hors du corps de pompe 300. De préférence, le capteur de fin de course 700 est positionné dans l'axe de translation X du piston 600 dans le corps de pompe 300.

Un tel positionnement du capteur de fin de course 700 permet d'éviter une intrusion dudit capteur de fin de course 700 dans le corps de pompe 300, ce qui ne diminue pas le volume alloué au fluide dans le corps de pompe 300.

Par ailleurs, cela permet de favoriser la maintenance du capteur de fin de course 700 lorsque cela est nécessaire.

Lorsque le capteur de fin de course 700 détecte la fin de course du piston 600 dans le corps de pompe 300, il transmet un signal de sortie à destination du calculateur 701 qui génère alors une consigne de fonctionnement à transmettre aux moyens moteur 101.

Cette consigne de fonctionnement réside en un allongement ou en un raccourcissement de la course du piston 600 dans le corps de pompe 300.

L'allongement ou le raccourcissement de la course du piston 600 est réalisé par réglage des moyens moteur 101 et notamment par réglage de l'action de la vis à rouleau sur la tige 601 du piston 600.

Plus précisément, la tige 601 du piston 600 présente un filetage externe en liaison avec les moyens moteur 101, la tige 601 du piston 600 formant avec les moyens moteur 101 une liaison du type vis à bille ou vis à rouleau.

Le réglage de la course du piston 600 dans le corps de pompe 300 se fait comme suit.

Le capteur de fin de course 700 du piston 600 détecte la venue du piston 600 et notamment de la tête 602 du piston 600 en butée contre le corps de pompe 300.

Cette venue en butée correspond au point mort haut du piston 600, c'est-à-dire au volume minimal alloué au fluide dans le corps de pompe 300.

Lorsque le capteur de fin de course 700 détecte ce point mort haut, notamment par une vibration dû à la venue en butée du piston 600 contre le corps de pompe 300, il émet un signal de sortie qui est reçu par le calculateur 701.

Le calculateur 701 génère alors une consigne de fonctionnement à destination des moyens moteur 101 visant à rallonger ou au contraire à raccourcir la course du piston 600 dans le corps de pompe 300.

En fonctionnement, la course du piston 600 est normalement augmentée. Par normalement augmentée, il est entendu que la course du piston 600 est augmentée de manière continue pour que le capteur de fin de course 700 ait une valeur non nulle de signal de sortie.

Lorsque la valeur du signal de sortie du capteur de fin de course 700 est nulle, cela signifie que le piston 600 ne se déplace pas selon sa course nominale et qu'une modification de la consigne de fonctionnement doit être effectuée.

Cela permet ainsi d'obtenir une nouvelle valeur non nulle du signal de sortie du capteur de fin de course, ce qui signifie qu'il n'y a pas de volume mort dans le corps de pompe 300 lors de la phase d'éjection.

Par ailleurs, le calculateur 701 est également paramétré pour effectuer un suivi de fonctionnement de la pompe 1.

A titre d'exemple, le calculateur peut transmettre, à un dispositif de contrôle 702 externe à la pompe 1, toutes les consignes de fonctionnement générées et transmises aux moyens moteur 101 ainsi que toutes les valeurs de sortie du capteur de fin de course 700.

Le dispositif de contrôle 702 est quant à lui paramétré pour comparer la fréquence de changement des consignes de fonctionnement transmises aux moyens moteur 101 et/ou les valeurs du signal de sorties du capteur de fin de course 700.

En cas de valeurs nulles du signal de sortie du capteur de fin de course 700 trop fréquentes, et/ou de changement de consignes trop récurrents, le dispositif de contrôle 702 peut émettre une alerte de dysfonctionnement de la pompe 1 à un opérateur.

La transmission entre le calculateur 701 et le dispositif de contrôle 702 peut avantageusement être réalisé sans fil. Une liaison filaire entre le calculateur 701 et le dispositif de contrôle 702 peut être une variante de réalisation.

Il est ainsi possible de suivre le fonctionnement de la pompe 1 et de contrôler le bon rendement de la pompe 1 ou alors de prévoir, le cas échéant, une intervention de maintenance de la pompe 1, notamment en cas de dysfonctionnement, ou de consignes de fonctionnement transmises aux moyens moteur 101 de manière trop fréquentes.

Le rendement de la pompe 1 s'en trouve ainsi amélioré, tout comme sa durée de vie puisque des phases de maintenance peuvent être mise en place en suivant le fonctionnement de la pompe 1.

La figure 1 illustre une pompe 1 comprenant un compartiment moteur 100 et au moins un compartiment de pompage 200.

Plus précisément, tel que cela est illustré sur la figure 1, la pompe 1 comprend avantageusement deux compartiments de pompage 200.

Les deux compartiments de pompage 200 sont situés chacun de part et d'autre du compartiment moteur 100.

En référence à la figure 2, le compartiment moteur 100 intègre des moyens moteurs 101 en prise avec un arbre de transmission 110 lui-même raccordé au compartiment de pompage 200.

Dans la suite de la description, il n'est fait référence qu'à un seul compartiment de pompage 200, étant entendu que les deux compartiments de pompage 200 sont identiques et présentent les mêmes caractéristiques structurelles et fonctionnelles.

Tel qu'illustré sur la figure 2, le compartiment de pompage 200 comprend un corps de pompe 300 à l'intérieur duquel un piston 600 est monté mobile en translation selon un axe de translation X.

L'axe de translation X définit une direction longitudinale à la pompe 1.

Pour permettre le pompage d'un fluide, le compartiment de pompage 200 comprend également :
- un raccord d'alimentation 203 débouchant dans une rampe d'admission 2031 monté autour du corps de pompe 300, et
- un raccord d'évacuation 204.

Plus particulièrement, la rampe d'admission 2031 se présente sous la forme d'une canalisation annulaire entourant le corps de pompe 300, cette canalisation annulaire ayant une pluralité d'orifices permettant d'alimenter fluidiquement le corps de pompe 300.

En outre, la pompe 1 comprend un compartiment intermédiaire 400 intercalé entre le compartiment moteur 100 et chaque compartiment de pompage 200 ainsi que des moyens d'isolation 500.

Dans le but de protéger le compartiment de pompage 200, la pompe 1 comprend un carter 201 fermé à l'une de ses extrémités par un bouchon 202a.

A l'autre de ses extrémités, le carter 201 s'étend en direction du compartiment moteur 100 et est refermé par un capot 202b permettant de définir un volume interne au carter 201 dans lequel le corps de pompe 300 est logé et protégé.

De préférence, un vide est réalisé dans le volume interne au carter 201.

Tel que cela est visible sur les figures 1 et 2, le raccord d'alimentation 203 et le raccord d'évacuation 204 débouchent chacun dans le carter 201 pour permettre respectivement l'alimentation fluidique et l'extraction de fluide dans ou hors du corps de pompe 300.

La liaison entre l'arbre de transmission 110 et le piston 600 est réalisé par des moyens de couplage mécaniques ad hoc, ces moyens de couplage mécanique pouvant être réversibles, c'est-à-dire qu'ils permettent de dissocier l'arbre de transmission 110 du piston 600.

Avantageusement, les moyens moteurs 101 comprennent une vis à billes ou, plus avantageusement encore, une vis à rouleau.

La vis à billes ou la vis à rouleau permet de pouvoir transformer un mouvement de rotation des moyens moteurs 101 en un mouvement de translation de l'arbre de transmission 110 et donc du piston 600 dans le corps de pompe 300.

Avantageusement, les moyens moteurs 101 comprennent un moteur à courant continu.

Le corps de pompe 300 définit une chambre fluidique 301 à l'intérieur de laquelle le piston 600 est mobile en translation selon l'axe de translation X.

Par sa mobilité dans la chambre fluidique 301, le piston permet le pompage et l'éjection de fluide depuis une réserve fluidique jusqu'à un réservoir à remplir.

Plus particulièrement, et de manière classique, lorsque le piston se déplace dans un premier sens selon l'axe de translation X, de sorte à augmenter le volume dans la chambre fluidique 301, une dépression se crée à l'intérieur de la chambre fluidique 301 pour permettre l'entrée de fluide dans la chambre fluidique 301 via le raccord d'alimentation 203 et plus particulièrement via la rampe d'admission 2031.

A l'inverse, lorsque le piston 600 se déplace dans un deuxième sens opposé au premier sens, le volume de la chambre fluidique 301 se réduit au fur et à mesure du déplacement du piston 600 dans la chambre fluidique 301, ce qui provoque la compression du fluide contenu dans la chambre fluidique 301 et donc son évacuation du corps de pompe 300 via le raccord d'évacuation 204, à destination du réservoir à remplir.

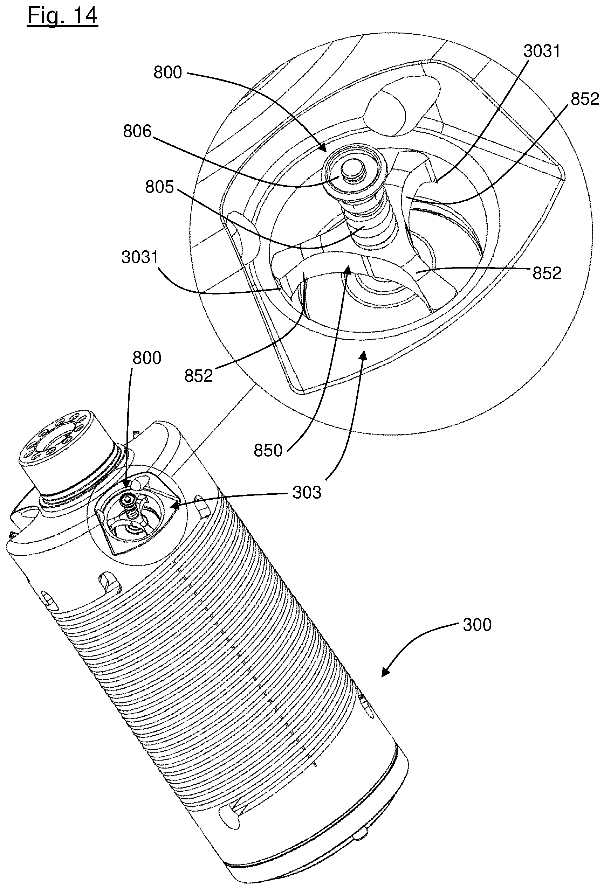

En référence à la figure 14, le corps de pompe 300 présente au moins une tubulure d'admission de fluide 303 débouchant à l'intérieur de la chambre fluidique 301.

Plus précisément, le corps de pompe 300 présente trois tubulures d'admission 303 régulièrement réparties à la périphérie du corps de pompe 300.

Pour permettre un pompage efficace de fluide, c'est-à-dire une succession de phases d'admissions et de phases d'éjection, chaque tubulure d'admission 303 est pourvue d'une soupape 800 permettant d'obturer ou non la tubulure d'admission 303 afin de laisser passer ou d'empêcher le passage de fluide depuis l'extérieur du corps de pompe 300 vers la chambre fluidique 301 ou inversement depuis la chambre fluidique 301 vers l'extérieur du corps de pompe 300.

Plus particulièrement, chaque tubulure d'admission 303 présente à une extrémité débouchant dans le corps de pompe 300, un siège de soupape 315.

Le siège de soupape 315 présente un profil semi-elliptique de révolution autour d'un axe central C du siège de soupape 315.

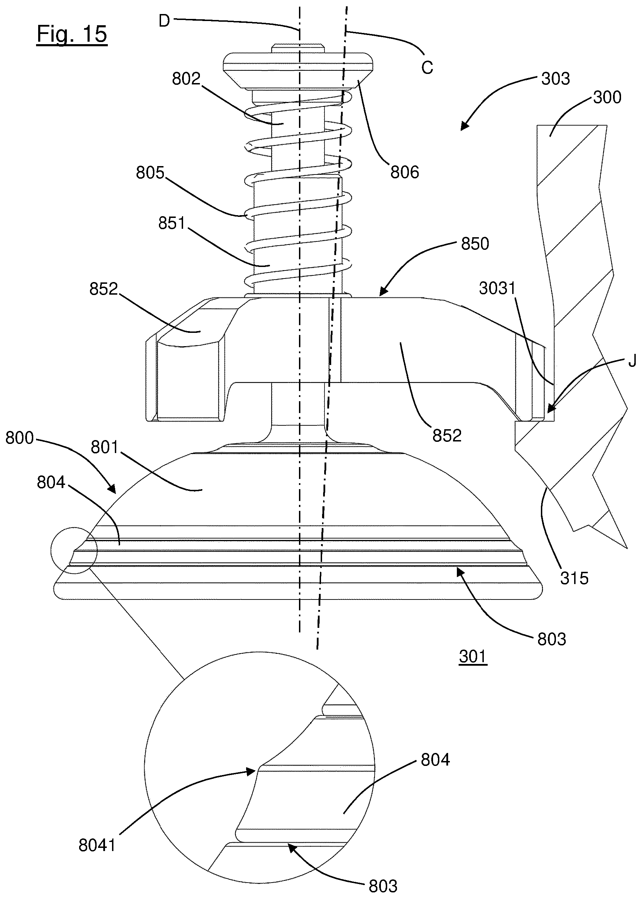

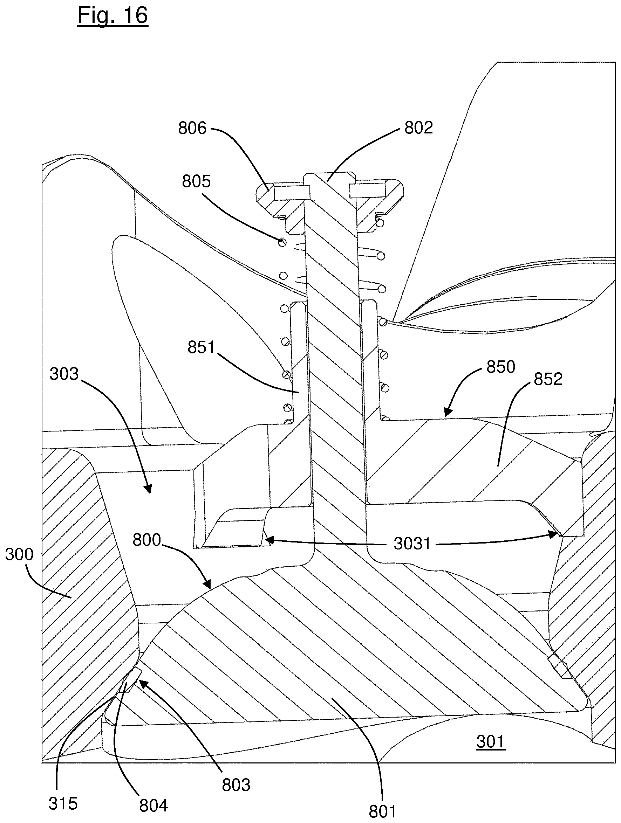

En référence aux figures 15 et 16, chaque soupape 800 présente une tête de soupape 801 et une tige 802 s'étendant depuis la tête 801, la tige 802 définissant un axe de déplacement D de la soupape 800 par rapport au siège de soupape 315.

Ainsi, chaque soupape 800 est mobile en translation selon l'axe de déplacement D,
entre :
- une position de passage dans laquelle elle est écartée du siège de soupape 315 ;
- une position d'obturation dans laquelle elle obture le siège de soupape 315.

La pompe 1 comprend également, pour chaque soupape 800, un guide 850 par lequel la soupape 800 est guidée en déplacement.

Le guide 850 prend place dans la tubulure d'admission 303 telle qu'expliqué ci-après.

En référence à la figure 15 et à la figure 16, le guide 850 présente un fût central 851 depuis lequel s'étendent au moins deux bras 852.

Plus particulièrement, tel que cela est visible sur la figure 14, le guide 850 présente trois bras 852 régulièrement espacés les uns des autres.

Autrement dit, deux bras 852 adjacents sont écartés angulairement l'un de l'autre d'un angle de 120°.

La pompe 1 comprend également, pour chaque soupape 800, des moyens de rappel 805 de la soupape 800 dans sa position d'obturation.

Les moyens de rappel 805 sont intercalés entre la soupape 800 et le guide 850.

Plus précisément, les moyens de rappel 805 comprennent un ressort de compression monté autour du fût central 851 du guide 850, le ressort étant intercalé entre les bras 852 du guide 850 et une butée 806 solidaire de la tige 802 à une extrémité opposée à la tête 801.

Avantageusement, la butée 806 est montée de manière amovible sur la tige 802, ce qui permet de pouvoir changer le ressort de compression en cas de besoin.

Tel que cela est illustré sur le médaillon de détail de la figure 14, sur la figure 15 et sur la figure 16, pour chaque soupape 800, le corps de pompe 300 présente, dans chaque tubulure d'admission 303, en amont du siège de soupape 315, selon un sens d'écoulement de fluide depuis l'extérieur vers l'intérieur du corps de pompe 300, au moins une encoche 3031.

Plus précisément, tel que cela est visible sur le médaillon de détail de la figure 14, chaque tubulure d'admission 303 présente trois encoches 3031 dans chacune desquelles est logé un bras 852 du guide 850.

Tel que cela est visible sur la figure 16, le guide 850 est monté dans la ou dans chaque encoche 3031 avec un jeu fonctionnel J.

Ce jeu fonctionnel J autorise un passage de l'axe de déplacement D d'une position désaxée par rapport à l'axe central C dans la position de passage de la soupape 800, à une position confondue avec l'axe central C dans la position d'obturation de la soupape 800.

Cela permet à la soupape 800 d'être libre en déplacement pour favoriser l'entrée de fluide dans la chambre 301 du corps de pompe 300 et de pouvoir assurer une bonne étanchéité lorsque le procédé de pompage est dans une phase d'évacuation et que la pression régnant dans la chambre 301 provoque une venue de la tête 801 de soupape 800 contre le siège de soupape 315.

La bonne étanchéité assurée par la soupape 800 est réalisée lorsque l'axe de déplacement D de la soupape 800 est confondue avec l'axe central C du siège de soupape 315.

Tel que cela est visible sur les figures 15 et 16, la tête 801 de soupape 800 présente une portion à profil semi elliptique 801a, tournée vers la tige 802, et complémentaire de forme avec le siège de soupape 315.

Pour parfaire encore l'étanchéité entre la soupape800 avec le siège de soupape 315, chaque soupape 800 présente une rainure annulaire 803 à l'intérieur de laquelle est logé un joint annulaire 804.

Plus particulièrement, la rainure annulaire 803 est pratiquée sur la tête 801 de la soupape 800, et le joint annulaire 804 est monté à l'intérieur de la rainure annulaire 803.

La rainure annulaire 803 est avantageusement pratiquée sur la portion à profil semi-elliptique de la tête 801 de la soupape 803.

Ainsi, dans la position d'obturation de la soupape 800, le joint annulaire 804 est intercalé entre la tête de soupape 801 et le siège de soupape 315.

En référence au médaillon de détail de la figure 15, le joint annulaire 804 présente une partie bombée 8041. La partie bombée 8041 est destinée à venir en appui contre le siège de soupape 315 dans la position d'obturation de la soupape.

Ainsi, lorsque la soupape 800 est dans sa position d'obturation, la partie bombée 8041 du joint annulaire 804 se déforme élastiquement pour épouser le siège de soupape 315 et réaliser une obturation hermétique du siège de soupape 315.

En fonctionnement, lorsque le procédé de pompage est dans une phase d'admission, le fluide à pomper entre dans la tubulure d'admission 303 et exerce une pression sur la tête 801 de la soupape 800. La pression repousse la soupape 800 en direction de la chambre fluidique 301 du corps de pompe 300.

Cela provoque alors une compression des moyens de rappel 805 entre la butée 806 de la soupape 800 et les bras 852 du guide 850.

Lorsque le procédé entre dans sa phase d'éjection du fluide, la pression dans la chambre fluidique 301 augmente.

Le fluide contenu dans la chambre fluidique 301 exerce alors un effort sur la tête 801 du piston 800 pour faire remonter celle-ci en direction de la tubulure d'admission 303, à l'aide notamment des moyens de rappel 805.

Lorsque la soupape 800 remonte en direction de la tubulure d'admission 303, le guide 850 se retrouve alors libre de mouvement dans les encoches 3031, et peut se déplacer dans la tubulure d'admission 303, grâce au jeu fonctionnel J (représenté sur la figure 15).

Plus précisément, les bras 852 se déplacent dans les encoches 3031 afin de permettre le replacement de l'axe de déplacement D pour que la soupape 800 se positionne de manière optimale contre le siège de soupape 315.

La pression exercée par le fluide contenu dans la chambre fluidique 301 est alors uniforme sur la tête du piston 301, ce qui provoque alors le passage de l'axe de déplacement D d'une position désaxée par rapport à l'axe central C à une position confondue avec l'axe central C lorsque la soupape 800 est dans sa position d'obturation.

L'effort exercé par les moyens de rappel 805 entre la butée 806 et le guide 850 provoque alors la mise en butée dans les encoches 3031 des bras 852 du guide 850.

Le montage de la soupape 800 dans le corps de pompe 300 ne peut être réalisé que par l'extérieur du corps de pompe 300.

Pour cela, la tête 801 de la soupape 800 est introduite de biais dans la tubulure d'admission 303 puis la tige 802 de la soupape 800 est pivotée de sorte que l'axe de déplacement D de la soupape 800 soit aligné ou quasiment avec l'axe central C du siège de soupape 315.

Le guide 850 est alors positionné de sorte que ses bras puissent être en regard des encoches 3031, ce qui permet, lorsque la soupape 800 est relâchée, que la tête vienne se loger dans le siège de soupape 315, de manière à former une liaison hermétique entre la tête 801 de la soupape 800 et le siège de soupape 315. Lorsque la liaison est hermétique entre la soupape 800 et le siège de soupape 315, cela correspond à un positionnement colinéaire de l'axe de déplacement D avec l'axe central C.

Tel qu'illustré sur la figure 2, la pompe 1 comprend une chemise 314 présentant une paroi de fond 3141. Le corps de pompe 300 est monté dans la chemise 314 à force, c'est-à-dire sans jeu entre la chemise 314 et le corps de pompe 300.

La paroi de fond 3141 de la chemise 314 bouche alors une ouverture de la tubulure d'admission 303 débouchant à l'extérieur du corps de pompe 300, ce qui permet de former une réserve de fluide dans la tubulure d'admission 3030 du corps de pompe 300.

La réserve de fluide, est alors remplie lorsque le fluide à pomper atteint la tubulure d'admission 303 et que la soupape 800 est dans sa position d'obturation.

La soupape 800 qui vient d'être décrite permet de pouvoir adopter sa position de passage et sa position d'obturation de manière automatique simplement par la pression ou la dépression régnant dans la chambre fluidique 301.

Par ailleurs, cette soupape 800 assure une bonne étanchéité dans sa position d'obturation par la présence du jeu fonctionnel J qui permet à la soupape 800 de pouvoir se désaxer librement pour assurer un passage de fluide non perturbé et de recouvrer une position d'obturation totalement hermétique.

L'obturation hermétique de la tubulure d'admission 300 par la soupape 800 est, en outre, complétée par la présence du joint annulaire 804 dont la partie bombée 8041 se déforme élastiquement pour épouser la forme du siège de soupape 315.

Avantageusement, le joint annulaire 804 est réalisé dans un matériau de la famille des polyimides ce qui lui permet de conserver ses caractéristiques structurelles et fonctionnelles en utilisation dans des températures extrêmes, chaudes ou froides.

## Revendications

1. Pompe (1), du type pour fluide cryogénique, comprenant un corps de pompe (300) et un piston (600), le piston (600) comprenant :
- au moins deux disques (603) superposés l'un sur l'autre, chaque disque (603) présentant une face supérieure (604) et une face inférieure (605) opposée à la face supérieure (604) ;
- un joint annulaire continu (606), logé entre deux disques (603) directement adjacents l'un à l'autre,
chaque disque (603) présentant, en son centre, un trou (6031) débouchant sur la face inférieure (605) et l'un au moins des deux disques (603) directement adjacents présentant, en son centre, une saillie (6032) s'étendant depuis la face supérieure (604) et venant coopérer avec le trou (6031) de l'autre des disques (603) directement adjacents de sorte que le joint annulaire continu (606) soit serré entre les disques (603) directement adjacents, chaque trou (6031) présentant un taraudage interne et chaque saillie (6032) présentant un filetage externe, le filetage externe d'une saillie (6032) coopérant hélicoïdalement avec le taraudage interne d'un trou (6031), le piston étant monté coulissant dans le corps de pompe (300) de sorte que le ou chaque joint annulaire continu (606) soit au contact d'une paroi interne du corps de pompe (300).

2. Pompe (1) selon la revendication 1 dans laquelle le piston (600) comprend au moins un troisième disque (603) présentant :
- une face supérieure (604) depuis laquelle s'étend une saillie (6032) ;
- une face inférieure (605) sur laquelle débouche un trou (6031),
le troisième disque (603) étant assemblé aux deux autres disques (603) par coopération de sa saillie (6032) avec un trou (6031) libre des deux autres disques (603), le piston (600) comprenant également un deuxième joint annulaire continu (606) intercalé entre la face supérieure (604) du troisième disque (603) et la face inférieure (605) d'un des deux autres disques (603) auquel il est assemblé .

3. Pompe (1) selon l'une quelconque des revendications 1 ou 2, dans laquelle l'un au moins des disques (603) présente, sur sa face supérieure (604), un épaulement (613) dans lequel est reçu le joint annulaire continu (606).

4. Pompe (1) selon l'une quelconque des revendications précédentes, dans laquelle le piston (600) comprend une pièce de raccordement (609) à une tige (601) du piston (600), la pièce de raccordement (609) présentant, en son centre un pion (6091) coopérant avec un trou (6031) libre de l'un des disques (603).

5. Pompe (1) selon la revendication précédente, dans laquelle la pièce de raccordements (609) présente une portion de raccordement (610) opposée au pion (6091), la portion de raccordement (610) présentant une forme sphérique destinée à être reçue dans une cavité sphérique (611) de la tige (601) du piston (600).

6. Pompe (1) selon l'une quelconque des revendications précédentes, dans laquelle le ou chaque joint annulaire continu (606), présente une section longitudinale en forme de U, le U s'ouvrant selon une direction parallèle à un axe de révolution (R) du joint annulaire continu (606).

7. Pompe (1) selon l'une quelconque des revendications précédentes, dans laquelle chaque disque (603) est réalisé en invar.

8. Pompe (1) selon l'une quelconque des revendications précédentes, dans laquelle le ou chaque joint annulaire continu (606) est réalisé dans un matériau de la famille des polyimides.

## Patentansprüche

1. Pumpe (1) für kryogene Flüssigkeiten, umfassend ein Pumpengehäuse (300) und einen Kolben (600), wobei der Kolben (600) umfasst:
- mindestens zwei übereinander liegende Scheiben (603), wobei jede Scheibe (603) eine Oberseite (604) und eine Unterseite (605), die der Oberseite (604) gegenüberliegt, aufweist;
- eine durchgehende Ringdichtung (606), die zwischen zwei direkt einander benachbarten Scheiben (603) untergebracht ist, wobei jede Scheibe (603) in ihrer Mitte ein Loch (6031) aufweist, das zur Unterseite (605) hin mündet, und wobei mindestens eine der beiden direkt benachbarten Scheiben (603) in ihrer Mitte einen Vorsprung (6032) aufweist, der sich von der Oberseite (604) aus erstreckt und mit dem Loch (6031) der anderen der direkt benachbarten Scheiben (603) zusammenwirkt, sodass die durchgehende Ringdichtung (606) zwischen den direkt benachbarten Scheiben (603) eingespannt ist, wobei jedes Loch (6031) ein Innengewinde aufweist und jeder Vorsprung (6032) ein Außengewinde aufweist, wobei das Außengewinde eines Vorsprungs (6032) spiralförmig mit dem Innengewinde eines Lochs (6031) zusammenwirkt, wobei der Kolben so im Pumpengehäuse (300) gleitend montiert ist, dass die oder jede durchgehende Ringdichtung (606) mit einer Innenwand des Pumpengehäuses (300) in Kontakt steht.

2. Pumpe (1) nach Anspruch 1, wobei der Kolben (600) mindestens eine dritte Scheibe (603) umfasst, die Folgendes aufweist:
- eine Oberseite (604), von der sich ein Vorsprung (6032) erstreckt;
- eine Unterseite (605), zu der hin ein Loch (6031) mündet, wobei die dritte Scheibe (603) mit den beiden anderen Scheiben (603) durch Zusammenwirken ihres Vorsprungs (6032) mit einem freien Loch (6031) der beiden anderen Scheiben (603) verbunden ist,
wobei der Kolben (600) ferner eine zweite durchgehende Ringdichtung (606) umfasst, die zwischen der Oberseite (604) der dritten Scheibe (603) und der Unterseite (605) einer der beiden anderen Scheiben (603), mit der sie verbunden ist, eingefügt ist.

3. Pumpe (1) nach einem der Ansprüche 1 oder 2, wobei mindestens eine der Scheiben (603) an ihrer Oberseite (604) eine Schulter (613) aufweist, in der die durchgehende Ringdichtung (606) aufgenommen wird.

4. Pumpe (1) nach einem der vorhergehenden Ansprüche, wobei der Kolben (600) ein Verbindungsstück (609) zu einer Stange (601) des Kolbens (600) umfasst, wobei das Verbindungsstück (609) in seiner Mitte einen Stift (6091) aufweist, der mit einem freien Loch (6031) einer der Scheiben (603) zusammenwirkt.

5. Pumpe (1) nach dem vorhergehenden Anspruch, wobei das Verbindungsstück (609) einen dem Stift (6091) gegenüberliegenden Verbindungsabschnitt (610) aufweist, wobei der Verbindungsabschnitt (610) eine kugelförmige Form aufweist, die dazu bestimmt ist, in einem kugelförmigen Hohlraum (611) der Stange (601) des Kolbens (600) aufgenommen zu werden.

6. Pumpe (1) nach einem der vorhergehenden Ansprüche, wobei die oder jede durchgehende Ringdichtung (606) einen U-förmigen Längsschnitt aufweist, wobei sich das U in einer Richtung parallel zu einer Drehachse (R) der durchgehenden Ringdichtung (606) öffnet.

7. Pumpe (1) nach einem der vorhergehenden Ansprüche, wobei jede Scheibe (603) aus Invar hergestellt ist.

8. Pumpe (1) nach einem der vorhergehenden Ansprüche, wobei die oder jede durchgehende Ringdichtung (606) aus einem Material der Familie der Polyimide hergestellt ist.

## Claims

1. A cryogenic fluid type pump (1), comprising a pump body (300) and a piston (600), the piston (600) comprising:
- at least two discs (603) superimposed on one another, each disc (603) having an upper face (604) and a lower face (605) opposite to the upper face (604);
- a continuous annular seal (606), housed between two discs (603) directly adjacent to one another, each disc (603) having, in its centre, a hole (6031) opening into the lower face (605) and at least one of the two directly adjacent discs (603) having, in its centre, a projection (6032) extending from the upper face (604) and cooperating with the hole (6031) of the other of the directly adjacent discs (603) so that the continuous annular seal (606) is clamped between the directly adjacent discs (603), each hole (6031) having an internal thread and each projection (6032) having an external thread, the external thread of a projection (6032) helically cooperating with the internal thread of a hole (6031), the piston being slidably mounted in the pump body (300) such that the or each continuous annular seal (606) is in contact with an inner wall of the pump body (300).

2. The pump (1) according to claim 1, wherein the piston (600) comprises at least one third disc (603) having:
- an upper face (604) from which a projection (6032) extends;
- a lower face (605) onto which a hole (6031) opens,
the third disc (603) being assembled with the two other discs (603) by cooperation of its projection (6032) with a free hole (6031) of the two other discs (603),
the piston (600) also comprising a second continuous annular seal (606) interposed between the upper face (604) of the third disc (603) and the lower face (605) of one of the two other discs (603) with which it is assembled.

3. The pump (1) according to any one of claims 1 or 2, wherein at least one of the discs (603) has, on its upper face (604), a shoulder (613) into which the continuous annular seal (606) is received.

4. The pump (1) according to any one of the preceding claims, wherein the piston (600) comprises a connecting part (609) for connection to a rod (601) of the piston (600), the connecting part (609) having, at its centre, a pin (6091) cooperating with a free hole (6031) of one of the discs (603).

5. The pump (1) according to the preceding claim, wherein the connecting part (609) has a connecting portion (610) opposite to the pin (6091), the connecting portion (610) having a spherical shape intended to be received in a spherical cavity (611) of the rod (601) of the piston (600).

6. The pump (1) according to any one of the preceding claims, wherein the or each continuous annular seal (606), has an U-shaped longitudinal cross-section, the U opening along a direction parallel to an axis of revolution (R) of the continuous annular seal (606).

7. The pump (1) according to any one of the preceding claims, wherein each disc (603) is made of invar.

8. The pump (1) according to any one of the preceding claims, wherein the or each continuous annular seal (606) is made of a material of the polyimide family.
